# EUROPEAN PATENT SPECIFICATION

(11) **EP 3 971 812 B1**
(45) Date of publication and mention of the grant of the patent: **12.11.2025**
(21) Application number: 19928467.0
(22) Date of filing: 03.06.2019
(51) Int. Cl.: G06Q 30/06, G06T 19/20, G06Q 30/0601

(54) **METHOD FOR PROVIDING CLOTHING FITTING SERVICE BY USING 3D AVATAR, AND SYSTEM THEREFOR**
VERFAHREN ZUR BEREITSTELLUNG EINES KLEIDUNGSANPASSUNGSDIENSTES UNTER VERWENDUNG EINES 3D-AVATARS UND SYSTEM DAFÜR
PROCÉDÉ DE FOURNITURE DE SERVICE D'ESSAYAGE DE VÊTEMENT AU MOYEN D'UN AVATAR 3D, ET SYSTÈME ASSOCIÉ

(30) Priority: 12.05.2019 US 201962846736 P
(43) Date of publication of application: 23.03.2022
(73) Proprietor: LG Electronics Inc., SEOUL 07336 (KR)
(72) Inventor: HAN, Donghoon, Seoul 06772 (KR)
(74) Representative: Mooser, Sebastian Thomas
(86) International application number: PCT/KR2019/006680
(87) International publication number: WO 2020/230943

(56) References cited:
- EP-A1- 3 404 619
- JP-A- 2007 000 204
- KR-A- 20100 137 901
- KR-A- 20170 068 741
- KR-B1- 100 790 755
- KR-B1- 101 915 278
- US-A1- 2008 222 262
- US-A1- 2008 249 897
- US-A1- 2014 108 208
- US-A1- 2014 249 961

## Description

### [Technical Field]

The present disclosure relates to a method for providing a clothing fitting service using a 3D avatar, and a system therefor, and more specifically, by managing a user's avatar individually as a service platform, and a method for providing a clothing fitting service using a 3D avatar, which can conveniently use the once generated avatar in various places such as a clothing company's Internet shopping mall, an open market, a kiosk, and the like, and a system therefor.

### [Background Art]

In general, the marketing technique through the Internet shopping mall has the advantage that it is possible to purchase and sell activities at a lower price, and various products are sold using this, the number and types of products sold by these online e-commerce systems are continuously increasing.

Therefore, the above-mentioned e-commerce system is continuously evolving and developing day by day, and it is being developed repeatedly in the form of mobilizing various marketing techniques.

Even in the case of using the developed Internet shopping mall system, the development of product groups such as clothing, which can be directly experienced and decided to purchase, is in a slow state. In order to solve this problem, conventionally, a technique for helping users purchase clothing by using a virtual avatar covered with clothing has been proposed.

Prior art can be found in US 2014/108208 A1 which generally relates to a personalized virtual shopping assistant, in US 2008/249897 A1 which generally relates to an electronic commerce system for the digital fashion using an avatar based on a user and method for operating the same, in US 2014/249961 A1 which generally relates to an interactive cubicle and method for determining a body shape and in US 2008/222262 A1 which generally relates to a digital album service system for showing digital fashion created by users and method for operating the same.

However, there is a problem in that it is difficult to provide the user with the feeling of wearing actual clothing only with the above-described prior art.

### [Detailed Description of Invention]

### [Technical Problem]

An object of the present disclosure is to solve the above needs and/or problems.

In addition, an object of the present disclosure is to implement a method for providing a clothing fitting service using a 3D avatar capable of fitting clothing selected by a user to an avatar resembling the user, and a system therefor.

In addition, an object of the present disclosure is to implement a method for providing a clothing fitting service using a 3D avatar that can conveniently use the once-generated avatar in various places such as a clothing company internet shopping mall, open market, kiosk, and a system therefor by managing a user's avatar individually as a service platform.

### [Technical Solution]

A method for providing a clothing fitting service using a 3D avatar according to an embodiment of the present disclosure includes acquiring a body image of a user through a 3D camera; acquiring body information of the user from the body image; generating an avatar corresponding to the user using the body information and the body image; personalizing and managing the avatar as a service platform; and fitting and displaying clothing selected by the user to the avatar while providing a clothing sales service that can be mapped to the avatar through a service provider selected from among registered service providers.

In addition, the acquiring body information of the user may include checking a change of the body information in real time or every configured time, when a rate of the change for the body information is out of a preconfigured error range, and upgrading the avatar based on the rate of the change for the body information.

In addition, the acquiring body information of the user may include extracting a user's body size from the acquired body image, and controlling a separation distance between the 3D camera and the user in response to the extracted user's body size.

In addition, the acquiring body information of the user may include extracting the body information from a corrected body image after correcting the body image using a correction program.

In addition, it is may be included the rate of change for the body information is provided to a health solution, and is reflected in the service platform by receiving health information corresponding to the rate of change from the health solution.

In addition, it is may be included the avatar configures a size ratio of the avatar based on the user's body size, and is displayed by varying the size ratio of the avatar according to the clothing selected by the user.

In addition, the generating an avatar corresponding to the user using the body information and the body image may include extracting characteristics of the user from a full length photograph image of the user, and reflecting the characteristics of the user in the avatar.

In addition, the fitting and displaying to the avatar may include fitting the clothing selected by the user to the avatar, and adjusting the selected clothing to correspond to the size of the avatar and then displaying it.

A system for providing a clothing fitting service using a 3D avatar according to an embodiment of the present disclosure includes a service platform configured to acquire body information of a user from a body image of the user taken by a 3D camera unit, and generate an avatar corresponding to the user using the body information and the body image; and a server configured to be connected to the service platform through a communication network, and configured to control, monitor, and manage operation of an entire configuration constituting the service platform, wherein the service platform displays clothing selected by the user by fitting the avatar while providing a clothing sales service that can be mapped to the avatar through a service provider selected from among registered service providers.

In addition, the service platform may include a 3D camera unit configured to include at least one 3D camera disposed on the service platform; an avatar generator configured to generate the avatar using the body information and the body image; a main controller configured to control at least two or more of components included in the service platform to operate in combination with each other, receive the avatar from the avatar generator, and fit the clothing selected by the user to the avatar; and a display unit configured to display the avatar to which the selected clothing is fitted through the main controller.

In addition, the service platform may include a communication unit configured to receive the body information from a user's mobile terminal or home appliances disposed in a user's home, and wherein the main controller checks a change of the body information in real time or every configured time through the communication unit, when a rate of the change for the body information is out of a preconfigured error range, and provides the rate of the change for the body information to the avatar generator.

In addition, the avatar generator may receive the rate of change for the body information and may upgrade the avatar under control of the main controller.

In addition, the main controller may extract a user's body size from the body image, and may control a separation distance between the 3D camera unit and the user in response to the extracted user's body size.

In addition, the main controller may extract the body information from a corrected body image after correcting the body image using a correction program.

In addition, the main controller may provide the rate of change for the body information to a health solution using the communication unit, and may receive health information corresponding to the rate of change from the health solution and may control it to be displayed on the mobile terminal or the display unit.

In addition, the main controller may configure a size ratio of the avatar based on a user's body size, and may control the avatar to be displayed on the display unit by varying the size ratio of the avatar according to the clothing selected by the user.

In addition, the main controller may fit the clothing selected by the user to the avatar, and may control to adjust the selected clothing to correspond to a size of the avatar.

### [Advantageous Effects]

A method of providing a clothing fitting service using a 3D avatar according to an embodiment of the present disclosure and a system therefor generate a user's avatar by extracting the user's body information using a 3D camera, and applies the user's face picture to the generated avatar, so that there is an effect that the user can purchase the clothing as if the user has directly tried on the clothing selected by the user through the avatar that resembles the user.

A method for providing a clothing fitting service using a 3D avatar according to an embodiment of the present invention and a system therefor manage the user's avatar individually as a service platform, so that there is an effect that the once-generated avatar can be conveniently used in various places such as a clothing company's Internet shopping mall, an open market, and a kiosk.

### [Description of Drawings]

FIG. 1 illustrates a block diagram of a wireless communication system to which methods proposed in the present disclosure may be applied.
FIG. 2 is a diagram showing an example of a signal transmission/reception method in a wireless communication system.
FIG. 3 shows an example of basic operations of a user terminal and a 5G network in a 5G communication system.
FIG. 4 is a block diagram illustrating a clothing fitting service system using a 3D avatar according to an embodiment of the present disclosure.
FIG. 5 is a diagram illustrating a service platform according to an embodiment of the present disclosure.
FIG. 6 is a block diagram of an AI device according to an embodiment of the present invention.
FIG. 7 is a diagram for explaining a method for providing a clothing fitting service using a 3D avatar according to an embodiment of the present disclosure.
FIG. 8 is a diagram for explaining in detail a method for providing a clothing fitting service using a 3D avatar according to an embodiment of the present disclosure.
FIGS. 9 and 10 are diagrams for explaining generation of an avatar of a user according to an embodiment of the present disclosure.
FIG. 11 is a diagram for explaining in detail a process of fitting selected clothing to a user's avatar according to an embodiment of the present disclosure.
FIG. 12 is a diagram for explaining an example of fitting selected clothing to a user's avatar according to an embodiment of the present disclosure.
FIG. 13 is a diagram for explaining an example of a clothing fitting service system using a 3D avatar according to an embodiment of the present disclosure.
FIG. 14 is a diagram for explaining another example of a clothing fitting service system using a 3D avatar according to an embodiment of the present disclosure.

### [Mode for Invention]

Hereinafter, embodiments disclosed in the present disclosure are described in detail with reference to the accompanying drawings. The same or similar reference numerals are assigned to the same or similar elements regardless of their reference numerals, and redundant descriptions thereof are omitted. It is to be noted that the suffixes of elements used in the following description, such as a "module" and a "unit", are assigned or interchangeable with each other by taking into consideration only the ease of writing the present disclosure, but in themselves are not particularly given distinct meanings and roles. Furthermore, in describing the embodiments disclosed in the present disclosure, a detailed description of a related known technology will be omitted if it is deemed to make the gist of the present disclosure vague. Furthermore, the accompanying drawings are merely intended to make easily understood the exemplary embodiments disclosed in the present disclosure.

Terms including ordinal numbers, such as the first and the second, may be used to describe various elements, but the elements are not restricted by the terms. The terms are used to only distinguish one element from the other element.

When it is said that one element is "connected" or "coupled" to the other element, it should be understood that one element may be directly connected or coupled" to the other element, but a third element may exist between the two elements. In contrast, when it is said that one element is "directly connected" or "directly coupled" to the other element, it should be understood that a third element does not exist between the two elements.

An expression of the singular number may include an expression of the plural number unless clearly defined otherwise in the context.

It is to be understood that in this application, a term, such as "include" or "have", is intended to designate that a characteristic, number, step, operation, element, part or a combination of them described in the specification is present, and does not exclude the presence or addition possibility of one or more other characteristics, numbers, steps, operations, elements, parts, or combinations of them in advance.

### A. UE and 5G network block diagram example

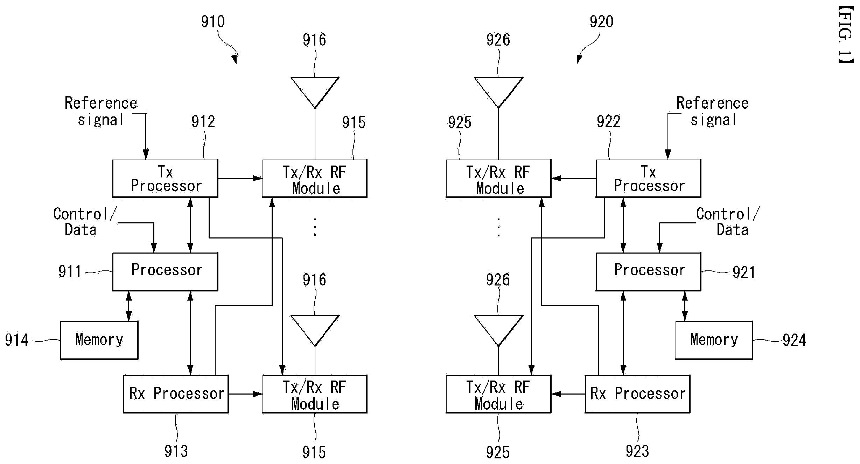

FIG. 1 illustrates a block diagram of a wireless communication system to which methods proposed in the present disclosure may be applied.

Referring to FIG. 1, a device (AI device) including an AI module may be defined as a first communication device 910, and a processor 911 may perform detailed AI operations.

A 5G network including another device (AI server) that communicates with the AI device is defined as a second communication device 920, and a processor 921 may perform detailed AI operations.

The 5G network maybe represented as the first communication device, and the AI device may be represented as the second communication device.

For example, the first communication device or the second communication device may be a base station, a network node, a transmission terminal, a reception terminal, a wireless device, a wireless communication device, an artificial intelligence (AI) device, or the like.

For example, a terminal or a user equipment (UE) may include a mobile phone, a smartphone, a laptop computer, a terminal for digital broadcasting, personal digital assistants (PDA), a portable multimedia player (PMP), a navigator, a slate PC, a tablet PC, an ultrabook, a wearable device (e.g., a watch type terminal (smartwatch), a glass type terminal (smart glass), and a head mounted display (HMD)). For example, the HMD may be a display device of a form, which is worn on the head. For example, the HMD may be used to implement VR, AR or MR.

Referring to FIG. 1, the first communication device 910 and the second communication device 920 include a processor 911, 921, a memory 914, 924, one or more Tx/Rx radio frequency (RF) modules 915, 925, a Tx processor 912, 922, an Rx processor 913, 923, and an antenna 916, 926. The Tx/Rx module is also called a transceiver. Each Tx/Rx module 915 transmits a signal through each antenna 926. The processor implements the above-described function, process and/or method. The processor 921 may be related to the memory 924 for storing a program code and data. The memory may be referred to as a computer-readable recording medium. More specifically, in the DL (communication from the first communication device to the second communication device), the transmission (TX) processor 912 implements various signal processing functions for the L1 layer (i.e., physical layer). The reception (RX) processor implements various signal processing functions for the L1 layer (i.e., physical layer).

UL (communication from the second communication device to the first communication device) is processed by the first communication device 910 using a method similar to that described in relation to a receiver function in the second communication device 920. Each Tx/Rx module 925 receives a signal through each antenna 926. Each Tx/Rx module provides an RF carrier and information to the RX processor 923. The processor 921 may be related to the memory 924 for storing a program code and data. The memory may be referred to as a computer-readable recording medium.

### B. Signal transmission/reception method in wireless communication system

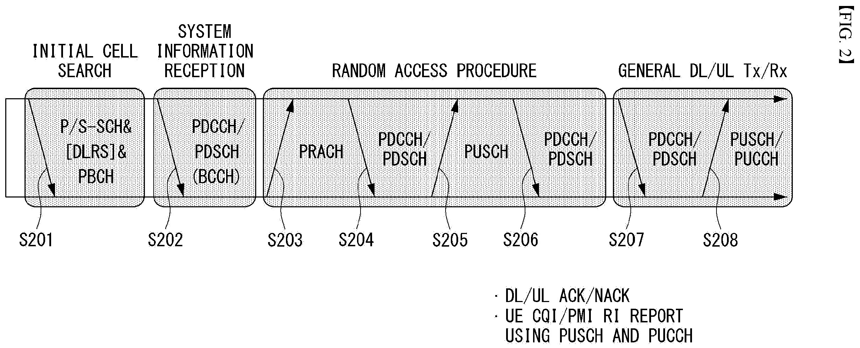

FIG. 2 is a diagram showing an example of a signal transmission/reception method in a wireless communication system.

Referring to FIG. 2, when power of a UE is turned on or the UE newly enters a cell, the UE performs an initial cell search operation, such as synchronizing with a BS (S201). To this end, the UE may receive a primary synchronization channel (P-SCH) and a secondary synchronization channel (S-SCH) from the BS, may synchronizes with the BS, and may acquire information, such as a cell ID. In the LTE system and the NR system, the P-SCH and the S-SCH are called a primary synchronization signal (PSS) and a secondary synchronization signal (SSS), respectively. After the initial cell search, the UE may acquire broadcast information within the cell by receiving a physical broadcast channel PBCH) form the BS. Meanwhile, the UE may identify a downlink channel state by receiving a downlink reference signal (DL RS) in the initial cell search step. After the initial cell search is terminated, the UE may acquire more specific system information by receiving a physical downlink control channel (PDCCH) and a physical downlink shared channel (PDSCH) based on information carried on the PDCCH (S202).

On the other hand, when there is no radio resource for first access to BS or signal transmission, the UE may perform a random access procedure (RACH) on the BS (steps S203 to step S206). To this end, the UE may transmit a specific sequence as a preamble through a physical random access channel (PRACH) (S203 and S205), and may receive a random access response (RAR) message for the preamble through a PDSCH corresponding to a PDCCH (S204 and S206). In the case of a contention-based RACH, a contention resolution procedure may be additionally performed.

The UE that has performed the above-described procedure may perform PDCCH/PDSCH reception (S207) and physical uplink shared channel (PUSCH)/physical uplink control channel (PUCCH) transmission (S208) as general uplink/downlink signal transmission processes. In particular, the UE receives downlink control information (DCI) through the PDCCH. The UE monitors a set of PDCCH candidates in monitoring occasions configured in one or more control element sets (CORESETs) on a serving cell based on corresponding search space configurations. The set of PDCCH candidates to be monitored by the UE is defined in terms of search space sets, and the search space set may be a common search space set or a UE-specific search space set. The CORESET is configured with a set of (physical) resource blocks having time duration of 1 to 3 OFDM symbols. The network may be configured so that the UE has a plurality of CORESETs. The UE monitors PDCCH candidates within one or more search space sets. Here, the monitoring means that the UE attempts decoding on a PDCCH candidate(s) within the search space. If the UE is successful in the decoding of one of the PDCCH candidates within the search space, the UE determines that it has detected a PDCCH in a corresponding PDCCH candidate, and performs PDSCH reception or PUSCH transmission based on DCI within the detected PDCCH. The PDCCH may be used to schedule DL transmissions on the PDSCH and UL transmissions on the PUSCH. Here, the DCI on the PDCCH includes downlink assignment (i.e., downlink (DL) grant) related to a downlink shared channel and at least including a modulation and coding format and resource allocation information, or an uplink (UL) grant related to an uplink shared channel and including a modulation and coding format and resource allocation information.

Referring to FIG. 2, an initial access (IA) procedure in a 5G communication system is additionally described.

The UE may perform cell search, system information acquisition, beam alignment for initial access, DL measurement, etc. based on an SSB. The SSB is interchangeably used with a synchronization signal/physical broadcast channel (SS/PBCH) block.

An SSB is configured with a PSS, an SSS and a PBCH. The SSB is configured with four consecutive OFDM symbols, and the PSS, the PBCH, the SSS/PBCH or the PBCH are transmitted for each OFDM symbol. Each of the PSS and the SSS is configured with one OFDM symbol and 127 subcarriers, and the PBCH is configured with three OFDM symbols and 576 subcarriers.

Cell search means a process in which the UE acquires time/frequency synchronization of a cell, and detects a cell ID (Identifier) (e.g. Physical layer Cell ID, PCI) of the cell. The PSS is used to detect a cell ID within a cell ID group, and the SSS is used to detect a cell ID group. The PBCH is used for SSB (time) index detection and half-frame detection.

There are 336 cell ID groups, and there are 3 cell IDs for each cell ID group. There are a total of 1008 cell IDs. Information on a cell ID group to which the cell ID of a cell belongs is provided/obtained through the SSS of the cell, and information on the cell ID among the 336 cells within the cell ID is provided/obtained through the PSS.

The SSB is periodically transmitted based on SSB periodicity. The SSB basic periodicity assumed by the UE during initial cell search is defined as 20 ms. After cell access, the SSB periodicity may be set as one of {5ms, 10ms, 20ms, 40ms, 80ms, 160ms} by the network (e.g., BS).

Next, system information (SI) acquisition is described.

SI is divided into a master information block (MIB) and a plurality of system information blocks (SIBs). SI other than the MIB may be referred to as remaining minimum system information (RMSI). The MIB includes information/parameter for the monitoring of a PDCCH that schedules a PDSCH carrying SystemInformationBlock1 (SIB1), and is transmitted by a BS through the PBCH of an SSB. SIB1 includes information related to the availability of the remaining SIBs (hereafter, SIBx, x is an integer of 2 or more) and scheduling (e.g. transmission periodicity, SI-window size). SIBx is included in the SI message, and is transmitted through the PDSCH. Each SI message is transmitted within a periodically occurring time window (i.e. SI-window).

A random access (RA) process in a 5G communication system is additionally described with reference to FIG. 2.

A random access process is used for various purposes. For example, the random access process may be used for network initial access, handover, UE-triggered UL data transmission. The UE may acquire UL synchronization and UL transmission resources through the random access process. The random access process is divided into a contention-based random access process and a contention-free random access process. A detailed procedure for the contention-based random access process is as follows.

The UE may transmit a random access preamble through a PRACH as Msg1 of a random access process in the UL. Random access preamble sequences having two different lengths are supported. A long sequence length 839 is applied to subcarrier spacings of 1.25 and 5 kHz, and a short sequence length 139 is applied to subcarrier spacings of 15, 30, 60 and 120 kHz.

When a BS receives the random access preamble from the UE, the BS transmits a random access response (RAR) message (Msg2) to the UE. A PDCCH that schedules a PDSCH carrying an RAR is CRC masked with a random access (RA) radio network temporary identifier (RNTI) (RA-RNTI), and is transmitted. The UE that has detected the PDCCH masked with the RA-RNTI may receive the RAR from the PDSCH scheduled by DCI carried by the PDCCH. The UE identifies whether random access response information for the preamble transmitted by the UE, that is, Msg1, is present within the RAR. Whether random access information for Msg1 transmitted by the UE is present may be determined by whether a random access preamble ID for the preamble transmitted by the UE is present. If a response for Msg1 is not present, the UE may retransmit an RACH preamble within a given number, while performing power ramping. The UE calculates PRACH transmission power for the retransmission of the preamble based on the most recent path loss and a power ramping counter.

The UE may transmit UL transmission as Msg3 of the random access process on an uplink shared channel based on random access response information. Msg3 may include an RRC connection request and a UE identifier. As a response to the Msg3, the network may transmit Msg4, which may be treated as a contention resolution message on the DL. The UE may enter an RRC connected state by receiving the Msg4.

### C. Beam management (BM) procedure of 5G communication system

A BM process may be divided into (1) a DL BM process using an SSB or CSI-RS and (2) an UL BM process using a sounding reference signal (SRS). Furthermore, each BM process may include Tx beam sweeping for determining a Tx beam and Rx beam sweeping for determining an Rx beam.

A DL BM process using an SSB is described.

The configuration of beam report using the SSB is performed when a channel state information (CSI)/beam configuration is performed in RRC_CONNECTED.
- A UE receives, from a BS, a CSI-ResourceConfig IE including CSI-SSB-ResourceSetList for SSB resources used for BM. RRC parameter csi-SSB-ResourceSetList indicates a list of SSB resources used for beam management and reporting in one resource set. Here, the SSB resource set may be configured with {SSBx1, SSBx2, SSBx3, SSBx4, ...}. The SSB indices may be defined from 0 to 63.
- The UE receives signals on the SSB resources from the BS based on the CSI-SSB-ResourceSetList.
- If SSBRI and CSI-RS reportConfig related to the reporting of reference signal received power (RSRP) have been configured, the UE reports the best SSBRI and corresponding RSRP to the BS. For example, if reportQuantity of the CSI-RS reportConfig IE is configured as "ssb-Index-RSRP", the UE reports the best SSBRI and corresponding RSRP to the BS.

If a CSI-RS resource is configured in an OFDM symbol(s) identical with an SSB and "QCL-TypeD" is applicable, the UE may assume that the CSI-RS and the SSB have been quasi co-located (QCL) in the viewpoint of "QCL-TypeD". Here, QCL-TypeD may mean that antenna ports have been QCLed in the viewpoint of a spatial Rx parameter. The UE may apply the same reception beam when it receives the signals of a plurality of DL antenna ports having a QCL-TypeD relation.

Next, a DL BM process using a CSI-RS is described.

An Rx beam determination (or refinement) process of a UE and a Tx beam sweeping process of a BS using a CSI-RS are sequentially described. In the Rx beam determination process of the UE, a repetition parameter is set as "ON", and in the Tx beam sweeping process of the BS, the repetition parameter is set as "OFF."

First, the Rx beam determination process of a UE is described.
- The UE receives an NZP CSI-RS resource set IE, including an RRC parameter regarding "repetition", from a BS through RRC signaling. In this case, the RRC parameter "repetition" has been set as "ON."
- The UE repeatedly receives signals on a resource(s) within a CSI-RS resource set in which the RRC parameter 'repetition' has been set as 'ON' in different OFDM symbols through the same Tx beam (or DL spatial domain transmission filter) of the BS.
- The UE determines its own Rx beam.
- The UE omits CSI reporting. That is, if the RRC parameter 'repetition' has been set as 'ON' , the UE may omit CSI reporting.

Next, the Tx beam determination process of a BS is described.
- The UE receives an NZP CSI-RS resource set IE, including the RRC parameter regarding 'repetition' , from the BS through RRC signaling. In this case, the RRC parameter 'repetition' has been set as 'OFF' , and is related to the Tx beam sweeping process of the BS.
- The UE receives signals on resources within the CSI-RS resource set in which the RRC parameter 'repetition' has been set as 'OFF' through different Tx beams (DL spatial domain transmission filter) of the BS.
- The UE selects (or determines) the best beam.
- The UE reports, to the BS, the ID (e.g. CRI) of the selected beam and related quality information (e.g. RSRP). That is, the UE reports, to the BS, the CRI and corresponding RSRP if the CSI-RS is transmitted for the BM.

Next, a UL BM process using an SRS is described.
- The UE receives, from a BS, RRC signaling (e.g. SRS-Config IE) including a use parameter configured (RRC parameter) as 'beam management'. The SRS-Config IE is used for an SRS transmission configuration. The SRS-Config IE includes a list of SRS-Resources and a list of SRS-ResourceSets. Each SRS resource set means a set of SRS-resources.
- The UE determines Tx beamforming for an SRS resource to be transmitted based on SRS-SpatialRelation Info included in the SRS-Config IE. In this case, SRS-SpatialRelation Info is configured for each SRS resource, and indicates whether to apply the same beamforming as beamforming used in an SSB, CSI-RS or SRS for each SRS resource.
- If SRS-SpatialRelationInfo is configured in the SRS resource, the same beamforming as beamforming used in the SSB, CSI-RS or SRS is applied, and transmitted. However, if SRS-SpatialRelationInfo is not configured in the SRS resource, the UE randomly determines Tx beamforming and transmits an SRS through the determined Tx beamforming.

Next, a beam failure recovery (BFR) process is described.

In a beamformed system, a radio link failure (RLF) frequently may occur due to the rotation, movement or beamforming blockage of the UE. Accordingly, in order to prevent the RLF from occurring frequently, BFR is supported in NR. The BFR is similar to the radio link failure recovery process, and may be supported when the UE is aware of a new candidate beam(s). For beam failure detection, the BS configures beam failure detection reference signals in the UE, and if the number of beam failure indications from the physical layer of the UE reaches a threshold set by RRC signaling within a period configured by the RRC signaling of the BS, the UE declares a beam failure. After the beam failure is detected, the UE triggers beam failure recovery by initiating a random access process on a PCell; and performs beam failure recovery by selecting a suitable beam (if the BS has provided dedicated random access resources for certain beams, they are prioritized by the UE). When the random access procedure is completed, the beam failure recovery is considered to be completed.

### D. Ultra-reliable and low latency communication (URLLC)

URLLC transmission defined in NR may mean transmission for (1) a relatively low traffic size, (2) a relatively low arrival rate, (3) extremely low latency requirement (e.g. 0.5, 1ms), (4) relatively short transmission duration (e.g., 2 OFDM symbols), and (5) an urgent service/message. In the case of the UL, in order to satisfy more stringent latency requirements, transmission for a specific type of traffic (e.g. URLLC) needs to be multiplexed with another transmission (e.g. eMBB) previously scheduled. As one scheme related to this, information indicating that a specific resource will be preempted is provided to a previously scheduled UE, and the URLLC UE uses the corresponding resource for UL transmission.

In the case of NR, dynamic resource sharing between eMBB and URLLC is supported. eMBB and URLLC services may be scheduled on non-overlapping time/frequency resources, and URLLC transmission may occur in resources scheduled for ongoing eMBB traffic. The eMBB UE may not be aware of whether the PDSCH transmission of the corresponding UE has been partially punctured, and the UE may not decode the PDSCH due to corrupted coded bits. NR provides a preemption indication by taking this into consideration. The preemption indication may also be referred to as an interrupted transmission indication.

In relation to the preemption indication, the UE receives a DownlinkPreemption IE through RRC signaling from the BS. When the UE is provided with the DownlinkPreemption IE, the UE is configured with an INT-RNTI provided by a parameter int-RNTI within a DownlinkPreemption IE for the monitoring of a PDCCH that conveys DCI format 2_1. The UE is configured with a set of serving cells by INT-ConfigurationPerServing Cell including a set of serving cell indices additionally provided by servingCellID, and a corresponding set of positions for fields within DCI format 2_1 by positionInDCI, configured with an information payload size for DCI format 2_1 by dci-PayloadSize, and configured with the indication granularity of time-frequency resources by timeFrequencySect.

The UE receives DCI format 2_1 from the BS based on the DownlinkPreemption IE.

When the UE detects DCI format 2_1 for a serving cell within a configured set of serving cells, the UE may assume that there is no transmission to the UE within PRBs and symbols indicated by the DCI format 2_1, among a set of the (last) monitoring period of a monitoring period and a set of symbols to which the DCI format 2_1 belongs. For example, the UE assumes that a signal within a time-frequency resource indicated by preemption is not DL transmission scheduled therefor, and decodes data based on signals reported in the remaining resource region.

### E. massive MTC (mMTC)

Massive machine type communication (mMTC) is one of 5G scenarios for supporting hyper-connection service for simultaneous communication with many UEs. In this environment, the UE intermittently performs communication at a very low transmission speed and mobility. Accordingly, mMTC has a major object regarding how long the UE will be driven at how low the cost is. In relation to the mMTC technology, in 3GPP, MTC and NarrowBand (NB)-IoT are handled.

The mMTC technology has characteristics, such as repetition transmission, frequency hopping, retuning, and a guard period for a PDCCH, a PUCCH, a physical downlink shared channel (PDSCH), and a PUSCH.

That is, the PUSCH (or PUCCH (in particular, long PUCCH) or PRACH) including specific information and the PDSCH (or PDCCH) including a response for specific information are repeatedly transmitted. The repetition transmission is performed through frequency hopping, for the repetition transmission, (RF) retuning is performed in a guard period from a first frequency resource to a second frequency resource, and specific information and a response for the specific information may be transmitted/received through a narrowband (e.g., 6 RB (resource block) or 1 RB).

### F. Basic operation using 5G communication

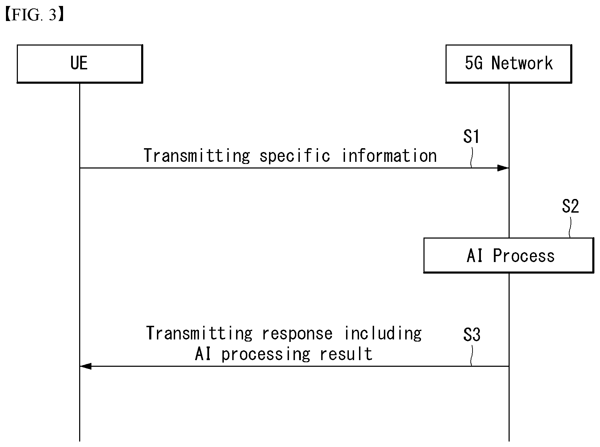

FIG. 3 shows an example of basic operations of a user terminal and a 5G network in a 5G communication system.

The UE transmits a specific information transmission to the 5G network (S1). In addition, the 5G network performs 5G processing on specific information (S2). Here, the 5G processing may include AI processing. In addition, the 5G network transmits a response including the AI processing result to the UE (S3).

### G. Application operation between user terminal and 5G network in 5G communication system

Hereinafter, the AI operation using 5G communication will be described in more detail with reference to wireless communication technology (BM procedure, URLLC, mMTC, etc.) described in FIGS. 1 and 2.

First, a method proposed in the present disclosure to be described later and a basic procedure of the application operation to which the eMBB of 5G communication are applied will be described.

As in steps S1 and S3 of FIG. 3, the UE performs an initial access procedure and a random access procedure with the 5G network prior to step S1 of FIG. 3 in order to transmit/receive signals, information and the like to/from the 5G network.

More specifically, the UE performs an initial access procedure with the 5G network on the basis of an SSB in order to acquire DL synchronization and system information. A beam management (BM) procedure and a beam failure recovery procedure may be added in the initial access procedure, and quasi-co-location (QCL) relation may be added in a process in which the UE receives a signal from the 5G network.

In addition, the UE performs a random access procedure with the 5G network for UL synchronization acquisition and/or UL transmission. The 5G network may transmit, to the UE, a UL grant for scheduling transmission of specific information. Accordingly, the UE transmits the specific information to the 5G network on the basis of the UL grant. In addition, the 5G network transmits, to the UE, a DL grant for scheduling transmission of 5G processing results with respect to the specific information. Accordingly, the 5G network may transmit a response including the AI processing result to the UE based on the DL grant.

Next, the method proposed in the present disclosure to be described later and the basic procedure of the application operation to which the URLLC technology of 5G communication is applied will be described.

As described above, after the UE performs an initial access procedure and/or a random access procedure with the 5G network, the UE may receive DownlinkPreemption IE from the 5G network. Then, the UE receives DCI format 2_1 including a pre-emption indication from the 5G network on the basis of DownlinkPreemption IE. The UE does not perform (or expect or assume) reception of eMBB data in resources (PRBs and/or OFDM symbols) indicated by the pre-emption indication. Thereafter, when the UE needs to transmit specific information, the UE may receive a UL grant from the 5G network.

Next, the method proposed in the present disclosure to be described later and the basic procedure of the application operation to which the mMTC technology of 5G communication is applied will be described.

Among the steps of FIG. 3, the part that is changed by the application of the mMTC technology will be mainly described.

In step S1 of FIG. 3, the UE receives a UL grant from the 5G network in order to transmit specific information to the 5G network. Here, the UL grant may include information on the number of repetitions for transmission of the specific information and the specific information may be repeatedly transmitted on the basis of the information on the number of repetitions. That is, the UE transmits the specific information to the 5G network on the basis of the UL grant. In addition, repetitive transmission of the specific information may be performed through frequency hopping, the transmission of the first specific information may be transmitted in a first frequency resource, and the transmission of the second specific information may be transmitted in a second frequency resource. The specific information may be transmitted through a narrowband of 6 resource blocks (RBs) or 1 resource block (RB).

The above-described 5G communication technology can be applied in combination with the methods proposed in the present disclosure to be described later or can be supplemented to specify or clarify the technical characteristics of the methods proposed in the present disclosure.

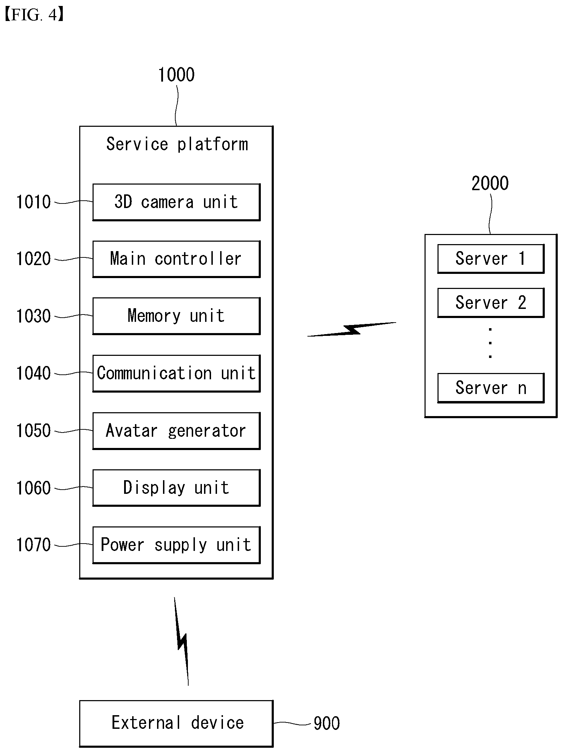

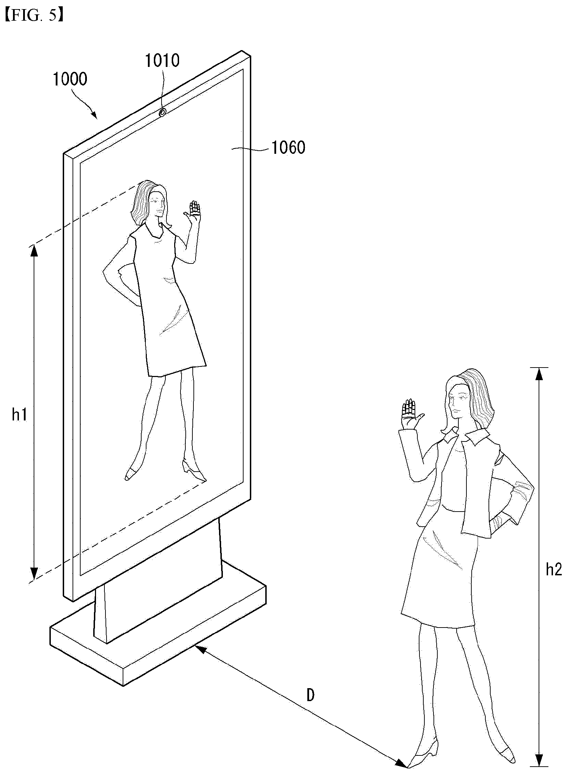

FIG. 4 is a block diagram illustrating a clothing fitting service system using a 3D avatar according to an embodiment of the present disclosure, and FIG. 5 is a diagram illustrating a service platform according to an embodiment of the present disclosure.

Referring to FIG. 4, a clothing fitting service system using a 3D avatar according to an embodiment of the present disclosure may include a service platform 1000, an external device 900, and a server 2000.

The service platform 1000 may acquire a body image of a user through at least one camera, acquire body information of the user from the body image, generate an avatar corresponding to the user by using the body information and the body image, and personalize and manage the generated avatar. The service platform 1000 may fit and display clothing selected by the user to the avatar while providing a clothing sales service that can be mapped to the avatar through a service provider selected from among registered service providers.

The service platform 1000 may include a 3D camera unit 1010, a main controller 1020, a memory unit 1030, a communication unit 1040, an avatar generator 1050, a display unit 1060 and a power supply unit 1070.

The 3D camera unit 1010 may be disposed on the service platform 1000. The 3D camera unit 1010 may be referred to as a contactless 3D camera/scanner or an RGB-D camera unit. A plurality of 3D camera units 1010 may be installed on an outer surface of the service platform 1000 or around the service platform 1000. For example, the 3D camera unit 1010 may be installed on the service platform 1000.

A photographing position of the service platform 1000 may be spaced apart from the 3D camera unit 1010 by a predetermined distance. That is, the 3D camera unit 1010 is spaced apart from the photographing position, so that the user standing at the photographing position can be photographed more accurately.

Although not shown, the 3D camera unit 1010 may include a plurality of sensors, a light source, and a camera controller. For example, the 3D camera unit 1010 may irradiate the light source to the user who wants to measure or photograph by using the light source. The light source may be a laser light source. When the laser light source irradiated to the user is reflected, the 3D camera unit 1010 may receive the reflected laser light source through the sensor. The sensor may be an image sensor. The 3D camera unit 1010 may provide the laser image acquired from the image sensor to the camera controller. The camera controller may include a field-programmable gate array (FPGA). The camera controller may extract profile data by supplying the acquired laser image to the field programmable gate array. The camera controller may generate 3D data by synthesizing the extracted profile data. Accordingly, the 3D camera unit 1010 may acquire the body image of the user by using the generated 3D data.

The main controller 1020 is electrically connected to the 3D camera unit 1010, the memory unit 1030, the communication unit 1040, the avatar generator 1050, the display unit 1060 and the power supply unit 1070 to control data, signals, information, and the like. That is, the main controller 1020 may generally control the overall operation of the service platform 1000 in addition to the operation related to an application program. The main controller 1020 may provide or process appropriate information or functions to the user by processing signals, data, information, etc. input or output through the components of the service platform 1000 or driving an application program stored in the memory unit 1030.

In addition, the main controller 1020 may control at least some of the components of the service platform 1000 in order to drive the application program stored in the memory unit 1030. Furthermore, the main controller 1020 may operate at least two or more of the components included in the service platform 1000 in combination with each other in order to drive the application program.

For example, the main controller 1020 may correct the body image of the user provided from the 3D camera unit 1010 by applying a correction program. The correction program may include a calibration program. The main controller 1020 may extract and correct a distorted image from the body image of the user generated using the correction program, and apply the corrected body image of the user to the program.

The main controller 1020 may be implemented as a circuit board. A plurality of circuit boards may be provided. The circuit board may be a printed circuit board (PCB) or a flexible printed circuit board (FPCB).

The avatar generator 1050 may generate an avatar of the user using the body information and the body image under control of the main controller 1020. The avatar generator 1050 may generate a user's own 3D avatar based on actual measurement based on body information, body image, and actual size information of each part of the user's body, etc.

The communication unit 1040 may communicate with the server 2000 or the external device 900. The server 2000 may be referred to as an external server. The communication unit 1040 may include at least one of a broadcast reception module, a mobile communication module, a wireless Internet module, a short-range communication module, and a location information module. A detailed description thereof will be omitted since it has been sufficiently described with reference to FIGS. 1 to 3.

The memory unit 1030 may store data supporting various functions of the service platform 1000. The memory unit 1030 may store a plurality of application programs (or applications) driven on the service platform 1000, data and commands for operation of the service platform 1000. At least some of these application programs may be downloaded from the external server 2000 through wireless communication. Meanwhile, the application program may be stored in the memory unit 1030, installed on the service platform 1000, and driven to perform an operation (or function) of the service platform 1000 by the main controller 1020.

For example, the memory unit 1030 may store the body image of the user generated by the 3D camera unit 1010, and store or temporarily store data exchanged with the server 2000 or the external device 900 using a network through the communication unit 1040. Also, the memory unit 1030 may store the user's avatar generated by the avatar generator 1050. In addition, the memory unit 1030 may store the body information of the user directly input by the user.

The display unit 1060 may be installed or disposed in front of the service platform 1000.

The service platform 1000 may show a user's actual appearance or display the user's avatar using the display unit 1060. For example, the display unit 1060 may reflect and show the user's actual appearance like a mirror, or may photograph a user standing at a photographing position through the 3D camera unit and display it in real time.

The display unit 1060 may implement a touch screen by forming a mutual-layer structure with the touch sensor or being integrally formed therewith. The touch screen may function as a user input unit providing an input interface between the service platform 1000 and the user, and may provide an output interface between the service platform 1000 and the user.

The display unit 1060 may display (output) information processed by the service platform 1000. For example, the display unit 1060 may display execution screen information of an application program driven in the service platform 1000 or User Interface (UI) and Graphic User Interface (GUI) information according to the execution screen information.

The display unit 1060 may include at least one of a liquid crystal display (LCD), a thin film transistor-liquid crystal display (TFT LCD), an organic light-emitting diode (OLED), a flexible display, a 3D display and an e-ink display.

In addition, two or more display units 1060 may exist depending on the implementation form of the service platform 1000. In this case, in the service platform 1000, a plurality of display units 1060 may be spaced apart or disposed integrally on one surface, or may be respectively disposed on different surfaces.

The display unit 1060 may include a touch sensor for sensing a touch on the display unit 1060 so as to receive a control command input by a touch method. Using this, when a touch is made to the display unit 1060, the touch sensor may sense a touch, and the main control unit 1020 may be configured to generate a control command corresponding to the touch based on this. The content input by the touch method may be body information obtained by directly measuring the user's own body, or menu items that can be instructed or designated in various modes.

The display unit 1060 may form a touch-screen together with the touch sensor, and in this case, the touch screen may function as a user input unit. In some cases, the touch screen may replace at least some functions of the operation unit. For example, the touch screen may acquire a fingerprint.

As described above, when the user's avatar is displayed on the display unit 1060, the user may fit the clothing selected from the online clothing shopping mall to the user's avatar. For example, the user may fit the selected clothing to the user's avatar using a drag and drop method.

In addition, the power supply unit 1070 may be arranged to be built-in to the service platform 1000. The power supply unit 1070 may receive external power and internal power under the control of the main control unit 1020 to supply the power to each component included in the service platform 1000.

At least some of the above-described components may operate in cooperation with each other to implement the operation, control, or control method of the service platform 1000 according to various embodiments described below. Also, the operation, control, or control method of the service platform 1000 may be implemented on the display unit 1060 by driving at least one application program stored in the memory unit 1030.

The external device 900 may communicate with the service platform 1000. The external device 900 may include a mobile terminal, a mobile phone, a smart phone, a laptop computer, a digital broadcasting terminal, a personal digital assistant (PDA), a portable multimedia player (PMP), a navigation system, and a slate PC, tablet PCs, a ultrabook, a wearable device (for example, a smartwatch, a smart glass, a head mounted display (HMD)), or the like.

The user may directly input actual size information of each part of the user's body using the external device 900. For example, the wearable device may sense changes in the user's body in real time, and transmit data on the sensed change in the user's body to the communication unit 1040 of the service platform 1000.

The server 2000 may determine and apply an optimal bit rate value that can be transmitted without errors by examining the bit rate of streaming download through which the communication network delivers data, and control, monitor, and manage the operation of the entire configuration constituting the service platform 1000. The server 2000 may be referred to as an external server or an integrated service server.

The server 2000 may include a first server (server 1) to an n-th server (server n, n is a natural number) having different functions. For example, the server 2000 may include a clothing-related server and an avatar server.

The clothing-related server may receive various clothing information from an online clothing shopping mall. The clothing-related server may receive and store detailed clothing information including size, color, material, producer, factory location, and manufacturing date for each model of clothing, and may provide information on the stored clothing. Also, the clothing-related server may provide a 3-dimension image or a 3D image using detailed clothing information for clothing selected or designated by the user. In addition, the clothing-related server may also three-dimensionally reflect the size information of each part, the characteristics of materials, and the characteristics of parts (accessories) in a 3-dimension image or 3D image.

The avatar server may receive 3D data or the body image of the user from the 3D camera unit 1010, and generate and manage a 3-dimension avatar image or a 3D avatar image corresponding to the actual size using the actual size information of each part of the user's body provided through the service platform 1000.

The three-dimensional avatar image may reflect the size information of each part of the user's body in the service platform 1000, at the same time, and may be an image in which a user's characteristics such as a face, body shape, and outline of an actual person are maximally reflected by inputting a full body photograph image of the user. The user's avatar may be formed based on the 3D avatar image.

Also, the avatar server may have substantially the same function as the avatar generator 1050 configured in the service platform 1000. The avatar server may be synchronized with the avatar generator 1050 in real time.

Also, the server 2000 may analyze coordinate information about the user's external device 900, and provide the user's movement pattern, clothing store information of a surrounding location according to the movement pattern, and the like to the user's external device 900 or the service platform 1000 using the analyzed coordinate information.

Referring to FIG. 5, the service platform 1000 according to an embodiment of the present disclosure may be disposed in an offline store.

The service platform 1000 may use the 3D camera unit 1010 to photograph a user or a purchaser. The service platform 1000 may photograph after confirming the user's or buyer's consent. Thereafter, the service platform 1000 may collect various information about the user or purchaser through authentication of the user or purchaser.

The service platform 1000 may extract the body size h2 of the user to be photographed using the 3D camera unit 1010, and may configure a photographing location between the user and the service platform 1000 based on this.

For example, when the user's body size h2 is 180 cm, the service platform 1000 may configure a first separation distance D in proportion to 180 cm, and may separate the photographing location by the first separation distance D. When the user's body size h2 is 160 cm, the service platform 1000 may configure a second separation distance in proportion to 160 cm, and may separate the photographing location by the second separation distance. The first separation distance D may be longer than the second separation distance.

The service platform 1000 may minimize distortion that occurs when photographing the user or the purchaser with the 3D camera unit 1010 by controlling the photographing position in proportion to the user's body size h2.

The service platform 1000 may display the size h1 of the avatar displayed on the display unit 1060 by varying the size ratio according to the body size h2 of the user.

The service platform 1000 may configure and display the size h1 of the avatar in a 1:1 ratio substantially equal to the body size h2 of the user, or the size h1 of the avatar in a ratio of 0.5 to 0.9:1, which is smaller than the body size h2 of the user.

That is, the service platform 1000 may change the ratio of the size h1 of the avatar according to the selected clothing. For example, when the service platform 1000 selects a shirt or jeans that can be easily worn, the service platform 1000 may display so that a feeling of fitting of the shirt or jeans worn on the avatar is mainly expressed by configuring it to a 1:1 size ratio that is substantially the same as that of the user's body.

Contrary to this, when the service platform 1000 selects a suit, trench code, and burberry code, the service platform 1000 may display so that the overall atmosphere for the suit, trench code, and burberry code worn on the avatar is mainly expressed by configuring it to the ratio of 0.5~0.9:1 size smaller than the user's body.

As described above, the service platform 1000 of the present invention may minimize the distortion of the body image by controlling the photographing position in response to the user's body size h2, and may induce the user to accurately select the required clothing by controlling the size ratio of the avatar differently depending on the clothing worn or fitted to the avatar.

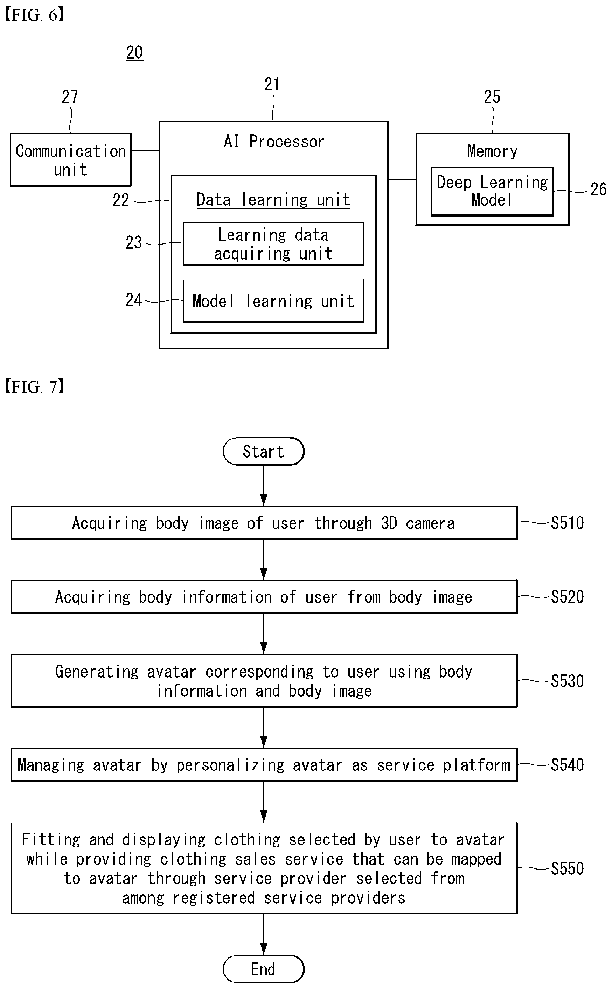

FIG. 6 is a block diagram of an AI device according to an embodiment of the present disclosure.

Referring to FIG. 6, an AI device 20 may include an electronic device including an AI module that can perform AI processing, or a server including the AI module, or the like. Further, the AI device 20 may be included in at least a part of the service platform 1000 shown in FIGS. 4 and 5 to perform together at least a part of the AI processing.

The AI processing may include all operations related to the control of the service platform 1000 shown in FIGS. 4 and 5. For example, the service platform 1000 may perform operations of processing/determining, and control signal generating by performing AI processing on the sensed data or the acquired data. Further, for example, the service platform 1000 may perform AI processing on data received through the communication unit 27 to perform control of the service platform 1000.

The AI device 20 may be a client device that directly uses the AI processing result, or a device in a cloud environment that provides AI processing results to other devices.

The AI device 20 may include an AI processor 21, a memory 25, and/or a communication unit 27.

The AI device 20, which is a computing device that can learn a neural network, may be implemented as various electronic devices such as a server, a desktop PC, a notebook PC, and a tablet PC.

The AI processor 21 may learn a neural network using programs stored in the memory 25. In particular, the AI processor 21 may learn a neural network for recognizing related data of the service platform 1000. Here, the neural network for recognizing the related data of the service platform 1000 may be designed to simulate the human brain structure on a computer and may include a plurality of network nodes having weights and simulating the neurons of human neural network. The plurality of network nodes may transmit and receive data in accordance with each connection relationship to simulate the synaptic activity of neurons in which neurons transmit and receive signals through synapses. Here, the neural network may include a deep learning model developed from a neural network model. In the deep learning model, a plurality of network nodes is positioned in different layers and may transmit and receive data in accordance with a convolution connection relationship. The neural network, for example, includes various deep learning techniques such as deep neural networks (DNN), convolutional deep neural networks(CNN), recurrent neural networks (RNN), a restricted boltzmann machine (RBM), deep belief networks (DBN), and a deep Q-network, and may be applied to fields such as computer vision, voice recognition, natural language processing, and voice/signal processing.

Meanwhile, a processor that performs the functions described above may be a general purpose processor (e.g. a CPU), but may be an AI-only processor (e.g. a GPU) for artificial intelligence learning.

The memory 25 may store various programs and data necessary for the operation of the AI device 20. The memory 25 may be implemented as a nonvolatile memory, a volatile memory, a flash-memory, a hard disk drive (HDD), a solid state drive (SDD), or the like. The memory 25 is accessed by the AI processor 21 and reading/writing /correcting/deleting/updating, etc. of data by the AI processor 21 may be performed. Further, the memory 25 may store a neural network model (e.g. a deep learning model 26) generated through a learning algorithm for data classification/recognition according to an embodiment of the present disclosure.

Meanwhile, the AI processor 21 may include a data learning unit 22 that learns a neural network for data classification/recognition. The data learning unit 22 may learn references about what learning data are used and how to classify and recognize data using the learning data in order to determine data classification/recognition. The data learning unit 22 may learn a deep learning model by acquiring learning data to be used for learning and by applying the acquired learning data to the deep learning model.

The data learning unit 22 may be manufactured in the type of at least one hardware chip and mounted on the AI device 20. For example, the data learning unit 22 may be manufactured in a hardware chip type only for artificial intelligence, and may be manufactured as a part of a general purpose processor (CPU) or a graphics processing unit (GPU) and mounted on the AI device 20. Further, the data learning unit 22 may be implemented as a software module. When implemented as a software module (or a program module including instructions), the software module may be stored in a computer-readable non-transitory computer readable media. In this case, at least one software module may be provided by an operating system (OS) or may be provided by an application.

The data learning unit 22 may include a learning data acquiring unit 23 and a model learning unit 24.

The learning data acquiring unit 23 may acquire learning data required for a neural network model for classifying and recognizing data. For example, the learning data acquiring unit 23 may acquire, as learning data, data and/or sample data of the mobile terminal 10 to be input to the neural network model.

The model learning unit 24 may learn such that a neural network model has a determination reference about how to classify predetermined data, using the acquired learning data. In this case, the model learning unit 24 may learn a neural network model through supervised learning that uses at least some of learning data as a determination reference. Alternatively, the model learning data 24 may learn the neural network model through unsupervised learning that finds out a determination reference by performing learning by itself using learning data without supervision. Further, the model learning unit 24 may learn the neural network model through reinforcement learning using feedback about whether the result of situation determination according to learning is correct. Further, the model learning unit 24 may learn the neural network model using a learning algorithm including error back-propagation or gradient decent.

When the neural network model is learned, the model learning unit 24 may store the learned neural network model in the memory. The model learning unit 24 may store the learned neural network model in the memory of a server connected with the AI device 20 through a wire or wireless network.

The data learning unit 22 may further include a learning data preprocessor (not shown) and a learning data selector (not shown) to improve the analysis result of a recognition model or reduce resources or time for generating a recognition model.

The learning data preprocessor may preprocess acquired data such that the acquired data may be used in learning for situation determination. For example, the learning data preprocessor may process acquired data into a predetermined format such that the model learning unit 24 may use learning data acquired for learning for image recognition.

Further, the learning data selector may select the learning data acquired by the learning data acquiring unit 23 or data necessary for learning from among the learning data preprocessed by the preprocessor. The selected learning data may be provided to the model learning unit 24. For example, the learning data selector may select only data for objects included in a specific area as learning data by detecting the specific area in an image acquired through a camera of the service platform.

Further, the data learning unit 22 may further include a model estimator (not shown) to improve the analysis result of the neural network model.

The model estimator inputs estimation data to the neural network model, and when an analysis result output from the estimation data does not satisfy a predetermined reference, it may make the model learning unit 22 perform learning again. In this case, the estimation data may be data defined in advance for estimating a recognition model. For example, when the number or ratio of estimation data with an incorrect analysis result of the analysis result of a recognition model learned with respect to estimation data exceeds a predetermined threshold, the model estimator may estimate that a predetermined reference is not satisfied.

The communication unit 27 may transmit the AI processing result by the AI processor 21 to an external device. For example, the external device may be referred to as an external electronic device. The external electronic device may include an intelligent electronic device, a mobile terminal, a portable device, a smart terminal, a smart device, a Bluetooth device, an autonomous vehicle, a robot, a drone, an AR device, a mobile device, a home appliance, and the like.

For example, when the external electronic device is an autonomous vehicle the AI device 20 may be defined as another vehicle or 5G network that communicates with the autonomous driving module vehicle. Meanwhile, the AI device 20 may be implemented by being functionally embedded in an autonomous module provided in a vehicle. Further, the 5G network may include a server or a module that performs control related to autonomous driving.

Meanwhile, the AI device 20 shown in FIG. 6 has been functionally separately described into the AI processor 21, the memory 25, the communication unit 27, etc., but it should be noted that the above-described components may be integrated in one module and referred to as an AI module.

FIG. 7 is a diagram for explaining a method for providing a clothing fitting service using a 3D avatar according to an embodiment of the present disclosure.

Referring to FIG. 7, a method for providing a clothing fitting service using a 3D avatar according to an embodiment of the present disclosure may include an acquiring step (S510, S520), a generating step (S530), a managing step (S540), and a displaying step (S550).

The acquiring steps S510 and S520 may acquire a body image of a user and body information of the user.

The acquiring steps S510 and S520 may include acquiring the body image of the user through a 3D camera S510 and acquiring the body information of the user from the body image S520.

The acquiring the body image of the user through a 3D camera S510 may photograph the body image of the user using at least one camera or at least one 3D camera disposed in the store.

The user may photograph the body image of the user using the service platform 1000 (refer to FIG. 4) installed in the store. For example, when the user is located at a photographing location of the service platform 1000, at least one camera (or at least one 3D camera) disposed on the service platform 1000 or disposed around the service platform 1000 may photograph the body image of the user while maintaining a constant distance from the photographing location to photograph the user, and rotating 360 degrees around the user.

Contrary to this, if the user is located at the photographing location of the service platform 1000, the photographing location of the service platform 1000 may be rotated slowly in all directions 360 degrees. While the user rotates 360 degrees in all directions, one camera (or one 3D camera) disposed on the periphery of the service platform 1000 may maintain a constant interval at the photographing location to photograph a user, and may photograph the body image of the user in one direction.

As described above, since the service platform 1000 installed in the store may photograph the user in various directions using at least one camera, it is possible to acquire a three-dimensional body image of the user. The three-dimensional body image of the user may be referred to as a 3D body image of the user.

The acquiring the body information of the user from the body image S520 may acquire or extract the body information of the user by receiving a three-dimensional body image of the user from at least one camera. According to the present disclosure, by measuring the size of each part of the body of the user based on a three-dimensional body image of the user, it is possible to acquire or extract the body information of the user. The body information of the user may be referred to as size information of each part of the user's body.

The generating S530 may generate an avatar corresponding to the user using the body information and the body image. The generating an avatar corresponding to the user using the body information and the body image S530 may generate an avatar corresponding to the user based on a body image captured by at least one camera and size information of each body part acquired through the body image.

The avatar may include a standard avatar and a measured avatar.

The standard avatar may be generated based on a standard body size. The standard avatar may be generated and stored using the standard body size.

The measured avatar may be generated based on the user's body size. The measured avatar may be generated using an actual image, body information, or actual size information of each part of the user's body. Alternatively, the measured avatar may resize the standard avatar by applying actual images, body information, or information that actually measured the user's body to the standard avatar.

The managing step S540 may manage the avatar by personalizing the avatar as a service platform. The personalizing and managing the avatar as a service platform S540 may store the generated avatar in the service platform, and may apply the user's physical characteristics or the user's specific details to the stored measured avatar. Accordingly, the managing step S540 may personalize and manage the measured avatar for each user by storing the measured avatar having different physical characteristics or specific details for each user in the service platform 1000.

The displaying step S550 may fit and display clothing selected by the user to the avatar while providing a clothing sales service that can be mapped to the avatar through a service provider selected from among registered service providers.

For example, the displaying step S550 may fit the clothing selected by the user in an online shopping mall or offline shopping mall to the generated measured avatar and display it.

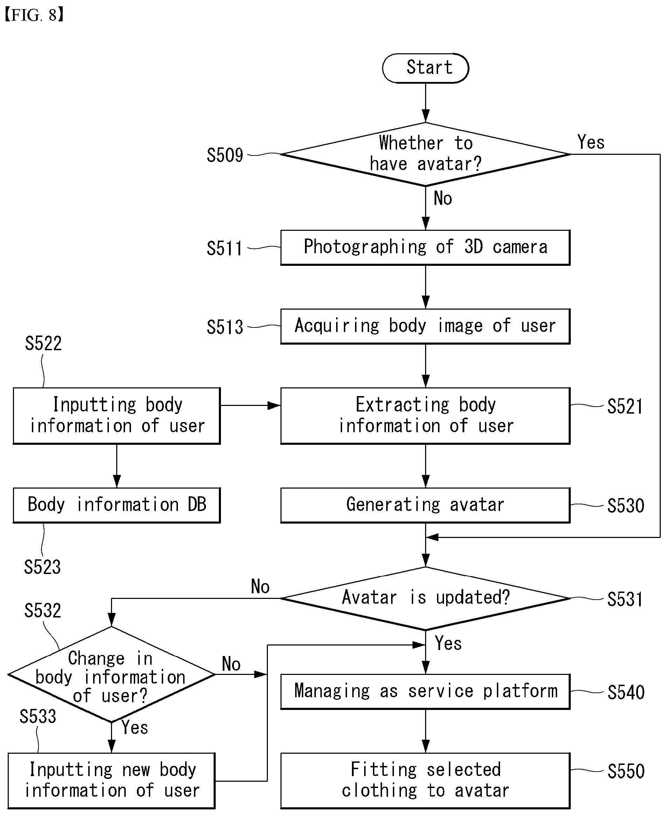

FIG. 8 is a diagram for explaining in detail a method for providing a clothing fitting service using a 3D avatar according to an embodiment of the present disclosure.

Referring to FIG. 8, the method for providing a clothing fitting service using a 3D avatar according to an embodiment of the present disclosure may generate an avatar, and fit the clothing selected by the user using the generated avatar.

When the user is located in various products installed in the store, the main controller may authenticate the user and check whether the user has an avatar (S509). If the user has the avatar, the main controller may move to step S530 after the avatar is generated.

If the user does not have an avatar, the main controller may generate an avatar for the user.

While the user is located in various products installed in the store, the main controller may photograph the user using at least one camera (or at least one 3D camera) (S511).

At least one camera (or at least one 3D camera) may acquire a body image of the user while maintaining a constant interval or distance from the user standing at the photographing position under the control of the main controller, and rotating 360 degrees around the user (S513).

The main controller may analyze the acquired user's body image, measure each analyzed body part of the user, and extract or measure size information for each part of the user's body from the measured user's body (S521).

In addition, the user may directly input the size information of each part of user's body (S522). The user's body information may be stored in a body information DB (S523). The body information DB may store the size information of each part of the user's body. The body information DB may update the size information of each part of the user's body by date.

In addition, the main controller may compare the extracted size information of each body part of the user with the actual size information of each body part directly input by the user, if the difference between these values is within the error range, and may select one of the extracted size information of each body part of the user or the actual size information of each body part directly input by the user.

Contrary to this, if the difference between these values is not within the error range, the main controller may select the actual size information of each body part directly input by the user.

The avatar generator may generate the user's avatar using the body information and the body image under the control of the main controller (S530). The avatar generator may generate a user's own 3D avatar based on actual measurement based on the body information, the body image, and the actual size information of each part of the user's body.

In addition, the avatar generator may generate a standard avatar based on information about a standard body type provided from an external server. The avatar generator may generate the user's avatar by applying the body information, the body image, and the actual size information of each part of the user's body based on the generated standard avatar. The user's avatar may be referred to as a measured avatar.

The measured avatar may be generated based on the user's body size. The measured avatar may be generated using an actual image, body information, or actual size information of each part of the user's body. Alternatively, the measured avatar may resize a standard avatar by applying the actual image, body information, or information actually measured on a user's body to the standard avatar.

As described above, the avatar generator may detect whether the generated user's avatar is updated (S531). The avatar generator may update the user's body information on the user's avatar in real time, every predetermined time or at a configured time, and apply the newly updated user's body information to the user's avatar. That is, the avatar may synchronize the generated user's body information with the user's avatar.

In addition, the main controller may detect a change in the user's body information (S532).

The main controller may receive the user's body information altered or changed through the user's external device or the service platform. The user may directly input information about user's body change through the external device or the service platform (S533).

The main controller may personalize and manage the avatar as the service platform (S540). The main controller may store the generated avatar in the service platform, and apply the user's physical characteristics or the user's specific details to the stored measured avatar. Accordingly, the main control unit may personalize and manage the measured avatar for each user by storing the measured avatar having different physical characteristics or specific details for each user in the service platform.

In addition, the main controller may fit and display clothing selected by the user to the avatar while providing a clothing sales service that can be mapped to the avatar through a service provider selected from among registered service providers (S550). For example, the main controller may fit the clothing selected by the user in an online shopping mall or offline shopping mall to the generated measured avatar and display it.

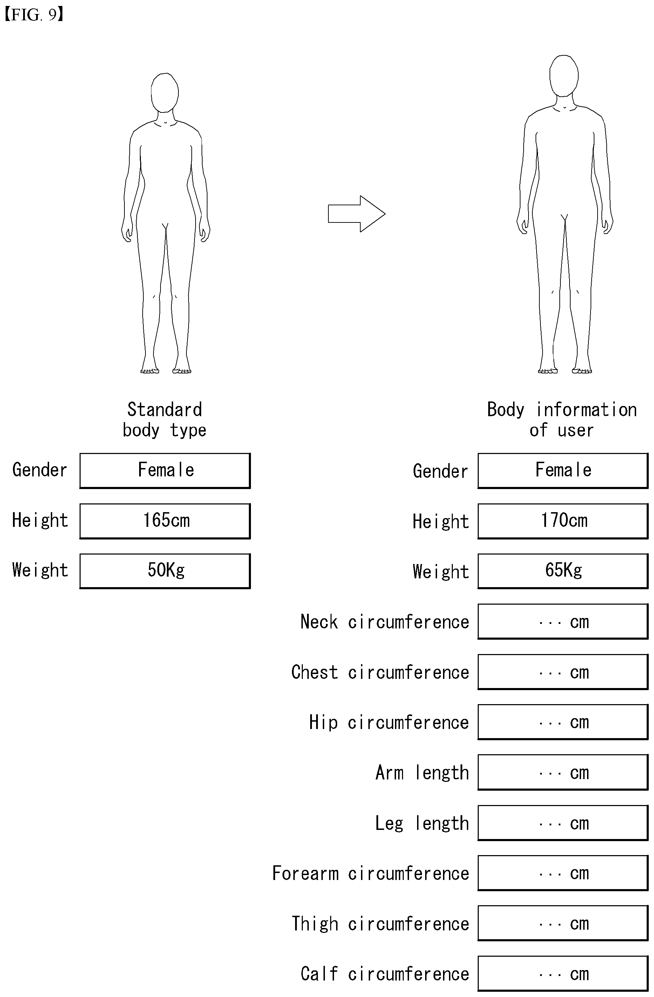

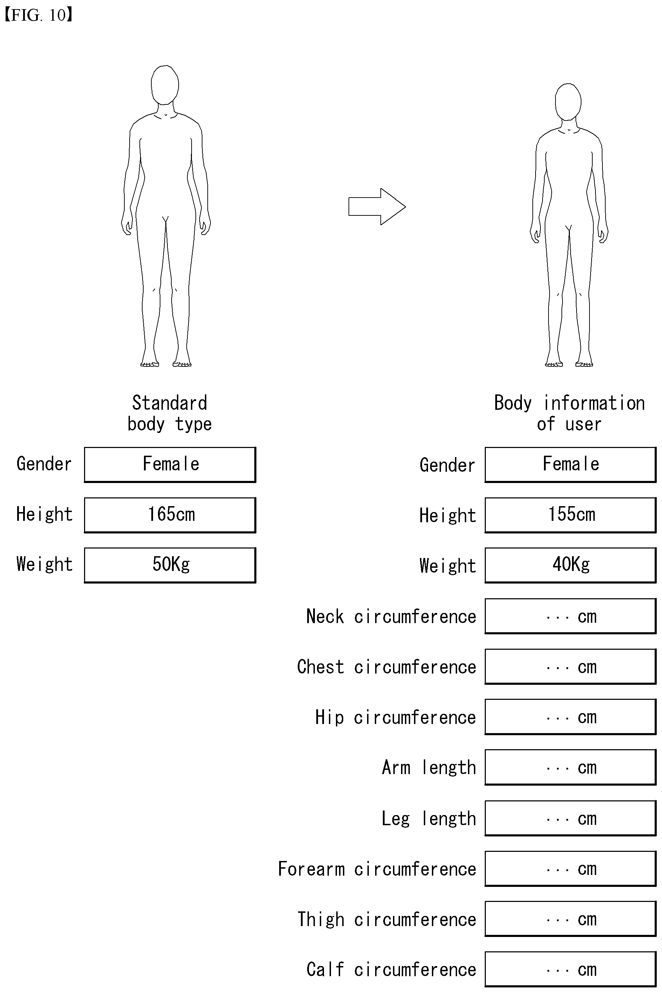

FIGS. 9 and 10 are diagrams for explaining generation of an avatar of a user according to an embodiment of the present disclosure.

Referring to FIGS. 9 and 10, the main controller according to an embodiment of the present disclosure may calculate or extract the detailed body size of the user from the body image. The main controller may display the extracted or calculated body size for the user to confirm or may provide it to an external device. In this case, if the body size is not correct, the user may directly input the body size or calculate the body size again. Alternatively, if the calculated body size is correct, the user may generate an avatar of the user based on the body size.

In order to generate the measured avatar, the user may directly input all detailed size of each part of user's body through the service platform or the external device.

The user may directly input user's height or weight and gender into the service platform or the external device, and may calculate detailed size for each part of the user's body.

The main controller may calculate a relative ratio by comparing the height or weight and gender of the user with the pre-stored height or weight of a standard body type, and may calculate the detailed body size of the user according to the ratio.

As shown in FIG. 9, for example, a case where the user's gender is female, the height is 170 cm, and the weight is 65 kg will be described. If a woman's height is 165 cm and has a standard body type, her weight is 50 kg, the ratio between the user's actual size and the standard body size may be (165/50)/(170/65). Based on this, sizes of other parts of the user may be calculated. That is, when a neck circumference size is required as a specific size for generating the avatar, the user's actual neck circumference size may be calculated by multiplying the neck circumference of a standard body type by the ratio (165/50)/(170/65), this may be calculated by applying the same to other body parts.

That is, the user may input through the external device or service platform by substantially measuring the neck circumference, the chest circumference, the hip circumference, the arm length, the leg length, the forearm circumference, the thigh circumference, the calf circumference, etc. of each part of the user's body, or may calculate each part of the user's body by using the ratio between the user's actual size and the standard body size.

As shown in FIG. 10, for example, a case where the user's gender is female, the height is 155 cm, and the weight is 40 kg will be described. If a woman's height is 165 cm and has a standard body type, her weight is 50 kg, the ratio between the user's actual size and the standard body size may be (165/50)/(155/40). Based on this, sizes of other parts of the user may be calculated. That is, when a neck circumference size is required as a specific size for generating the avatar, the user's actual neck circumference size may be calculated by multiplying the neck circumference of a standard body type by the ratio (165/50)/(155/40), this may be calculated by applying the same to other body parts.

That is, the user may input through the external device or service platform by substantially measuring the neck circumference, the chest circumference, the hip circumference, the arm length, the leg length, the forearm circumference, the thigh circumference, the calf circumference, etc. of each part of the user's body, or may calculate each part of the user's body by using the ratio between the user's actual size and the standard body size.

In addition, in the case of the user's body information, the main controller may collect not only height and weight, but also information on the user's specific matters such as the user's face color, hair color, nail color, and the like. This is because, in some cases, judgment whether the clothing selected by the user is suitable for the user should check whether it conforms to the user's specific details as well as the size of the body.

The main controller may synchronize the user's specific details with the user's avatar by providing the user's specific details to the avatar generator.

As described above, according to the present disclosure, not only an avatar identical to the user's body size can be generated, but also the user's avatar substantially identical to the user's specific details, such as the user's skin color, can be generated, so that the present disclosure can provide more accurate information for the user to select the clothing.

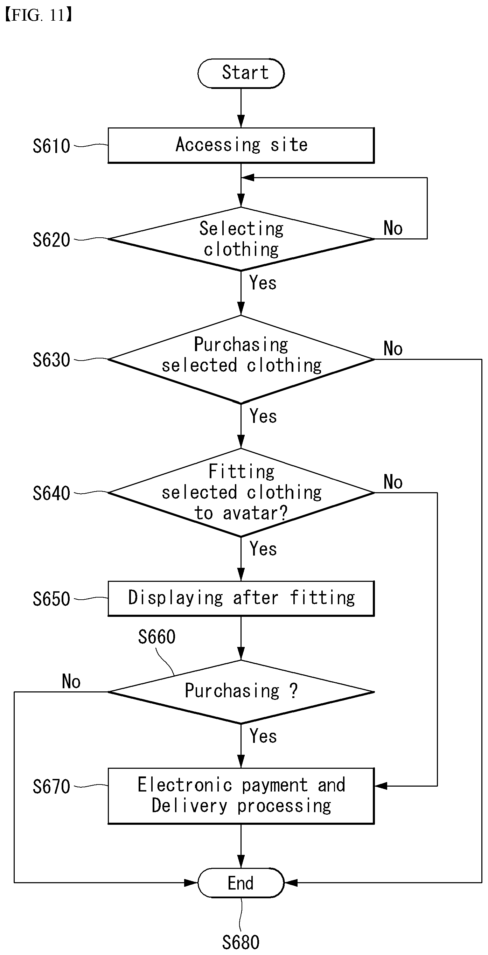

FIG. 11 is a diagram for explaining in detail a process of fitting selected clothing to a user's avatar according to an embodiment of the present disclosure.

Referring to FIG. 11, the user may access an online shopping mall site (S610).

The user may search for clothing displayed on the online shopping mall site and select the clothing (S620). The user may or may not purchase the selected clothing (S630 and S680). Alternatively, the user may store the selected clothing in the shopping cart of the online shopping mall.

Before purchasing the selected clothing (S630), the user may fit the selected clothing to the avatar (S640). The online shopping mall site may call up the user's avatar from the above-described avatar server or a service platform disposed in an off shopping mall. If there is no user's avatar, as described with reference to FIGS. 7 and 8, the user's avatar may be generated first.

In addition, the user may authenticate the user through various authentication methods before calling the user's avatar to the online shopping mall site S610. When user authentication is completed, the online shopping mall site may receive the user's avatar from the avatar server or service platform.

Accordingly, the online shopping mall site may display the user's avatar, and display the clothing selected by the user after fitting it to the user's avatar (S650). The user may control the online shopping mall site to display the user's avatar fitting the selected clothing while rotating the avatar at various angles.

In addition, the user may determine how well the clothing selected by the user can match with the user while controlling the online shopping mall site to enlarge or reduce the user's avatar fitting the selected clothing.

In addition, the user may configure differently a background on which the user's avatar fitting the selected clothing by controlling the online shopping mall site is displayed in consideration of user's specific details.

In addition, the user may control the movement or behavior of the user's avatar. For example, the user may control the user's avatar wearing the selected clothing to move in various ways, so that the user may know the wearing state of the clothing according to the behavior of the avatar and the feeling of fitting between the clothing and the avatar. For example, if the user prefers a relaxed fit rather than clothing that sticks to the user's body, the user may finally select the clothing by changing the size of the clothing.

As described above, using various methods, the user may finally decide to purchase after fitting or wearing the selected clothing to the user's avatar (S660).

When the user makes a purchase decision for the selected clothing, electronic payment and delivery processing may be performed (S670).

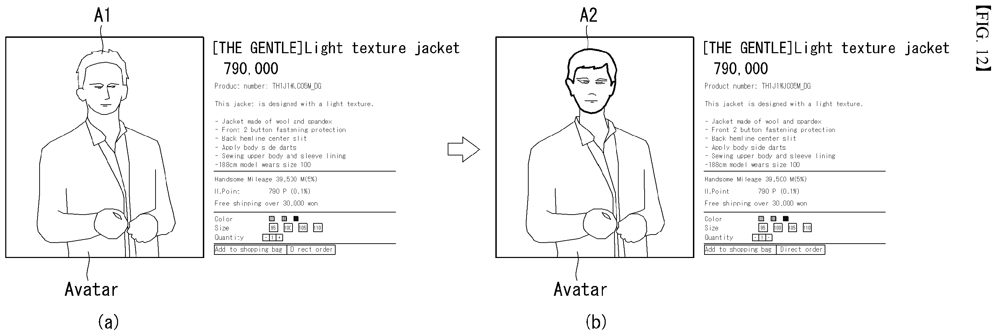

FIG. 12 is a diagram for explaining an example of fitting selected clothing to a user's avatar according to an embodiment of the present disclosure.

Referring to FIG. 12, (a) shows fitting clothing to a standard avatar, and (b) shows fitting clothing to the user's avatar.

As shown in (a) of FIG. 12, the online shopping mall site may display various clothing by fitting it to a standard avatar or an exclusive model. Even if the online shopping site has detailed information about clothing worn by the standard avatar or the exclusive model, the user or the purchaser cannot accurately grasp the wearing state of the clothing or the fitting feeling of the clothing since the standard avatar or the exclusive model different from the user's or purchaser's own body is wearing the clothing.

On the other hand, as shown in (b) of FIG. 12, the online shopping mall site may call the user's avatar synchronized with the face, body, and features that are substantially identical to the user or purchaser and display it by fitting the clothing selected by the user. Accordingly, by freely fitting the selected clothing to the user's avatar, the user may accurately grasp the wearing state of the clothing or the fitting feeling of the clothing.

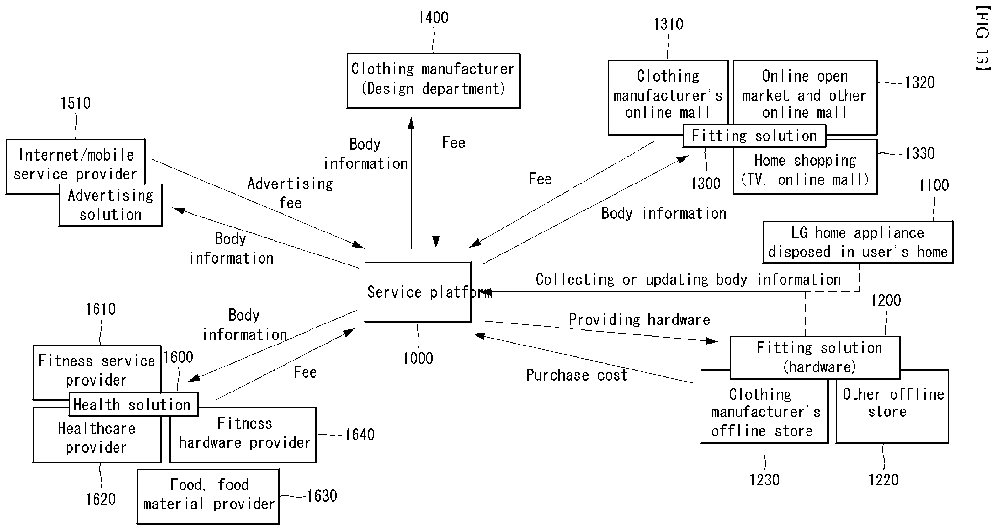

FIG. 13 is a diagram for explaining an example of a clothing fitting service system using a 3D avatar according to an embodiment of the present disclosure.

Referring to FIG. 13, a service platform 1000 according to an embodiment of the present disclosure may be electrically connected to at least one server or solution.

The service platform 1000 may be electrically connected to at least one home appliance 1100 disposed in the user's home. The service platform 1000 may collect or update the user's body information from the home appliances 1100.

For example, an electronic scale may transmit information about the user's weight to the service platform 1000 whenever the user measures his/her own weight. The service platform 1000 may compare the transmitted weight of the user with a pre-stored weight of the user, and if the difference between the compared weights is out of the set error range, may update the user's weight information.

The service platform 1000 may be electrically connected to fitting solutions 1200 and 1300. The fitting solutions 1200 and 1300 may be hardware or software that manages various functions suitable for the user's avatar or user's clothing, handles problems, and enables interworking with each other in the service platform 1000.

The fitting solutions 1200 and 1300 may include a first fitting solution 1200 and a second fitting solution 1300.

The first fitting solution 1200 may be disposed in the clothing manufacturer's offline store 1230 or other offline stores 1220. The first fitting solution 1200 may be an offline virtual fitting service. The service platform 1000 may provide hardware to the first fitting solution 1200. For example, the first fitting solution 1200 may be disposed in the offline store in the shape of the service platform 1000.

The first fitting solution 1200 may provide a purchase cost for the service platform 1000.

The second fitting solution 1300 may be disposed in a clothing manufacturer's online mall 1310, online open market and other online malls 1320, and home shopping (TV, online mall, 1330).

The second fitting solution 1300 may be an online virtual fitting service. The service platform 1000 may provide the user's body information to the second fitting solution 1300. The second fitting solution 1300 may provide a fee for the user's body information to the service platform 1000.

The service platform 1000 may be electrically connected to a clothing manufacturer 1400.

The service platform 1000 may provide the user's body information to the clothing manufacturer 1400. The clothing manufacturer 1400 may provide a 3D image of the clothing to the service platform 1000 so that the clothing can be fitted to the user's avatar. The clothing manufacturer 1400 may provide a fee for the user's body information to the service platform 1000. The clothing manufacturer 1400 receives not only the body information of a customer but also information on needs of the customer through the service platform 1000, so that productivity for the clothing can be improved.

The service platform 1000 may be electrically connected to an advertising solution 1500.

The advertising solution 1500 may be disposed in the Internet/mobile service provider 1510. The service platform 1000 may provide the user's body information to the advertising solution 1500. The advertising solution 1500 may provide an advertising fee to the service platform 1000. The advertising solution 1500 receives not only physical information of the customer but also information on needs of the customer through the service platform 1000, so that the advertising solution 1500 may accurately identify customer needs and respond quickly to them, thereby improving advertisement efficiency.

The service platform 1000 may be electrically connected to a health solution 1600.

The health solution 1600 may be disposed in a fitness service provider 1610, a fitness hardware provider 1640, a healthcare provider 1620, and a food, food material provider 1630. The service platform 1000 may provide the user's body information to the health solution 1600. The health solution 1600 may provide a fee to the service platform 1000. The health solution 1600 receives the customer's body information, information about the customer's body change, and information related to the customer's health through the service platform 1000, so that the health solution 1600 may provide the customer with an exercise service optimized for the customer, a medical service optimized for the customer, and a food/food service suitable for the customer.

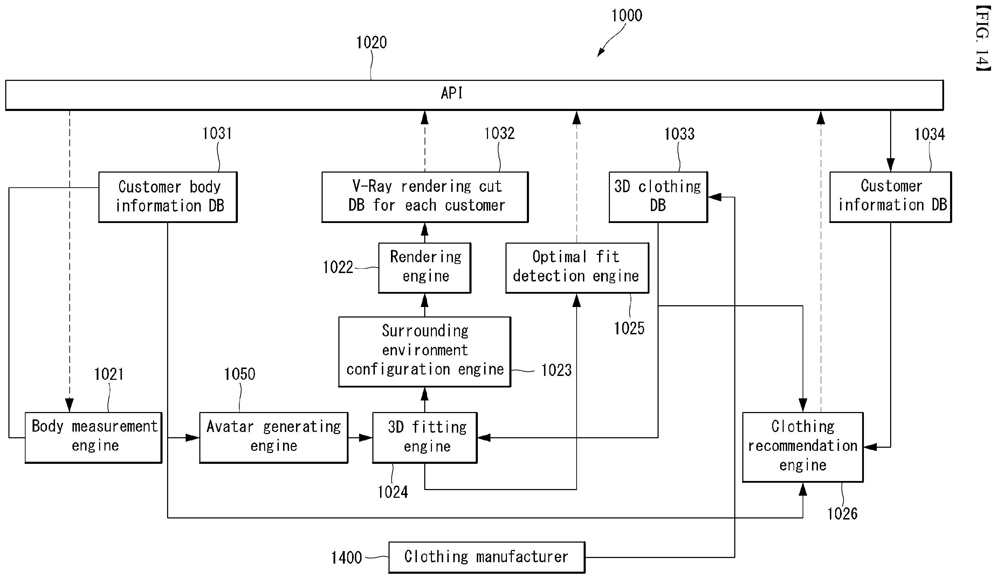

FIG. 14 is a diagram for explaining another example of a clothing fitting service system using a 3D avatar according to an embodiment of the present disclosure.

Referring to FIG. 14, a service platform 1000 according to an embodiment of the present disclosure may include a main controller 1020 and at least one DB.

The main controller 1020 may include at least one or more application programs. For example, the main controller 1020 may include an application programming interface (API). The API may be various functions required for screen composition or program operation so that a program running in the operating system of the service platform 1000 can be easily made. For example, a display unit may display the API under control of the main controller 1020.

The main controller 1020 may include at least one or more engines. The engine may be referred to as a controller or a driver.

For example, the main controller 1020 may include a body measurement engine 1021 capable of measuring the body size of a customer or user. The body measurement engine 1021 may be electrically connected to the 3D camera unit 1010 (refer to FIG. 4), and may receive a body image from the 3D camera unit 1010 (refer to FIG. 4). The body measurement engine 1021 may analyze the acquired body image of the user, measure each analyzed body part of the user, and extract or measure size information for each part of the user's body from the measured user's body.

In addition, the body measurement engine 1021 may receive size information about the user's body through various external devices 900 (refer to FIG. 4). For example, the external device 900 (refer to FIG. 4) may include an intelligent electronic device, a mobile terminal, a smartphone, a mobile device, and the like. For example, the body measurement engine 1021 may receive size information about the user's body measured using a smartphone, a 3D signage camera, or a selfie, etc.

The body measurement engine 1021 may store the measured size information for each part of the user's body in a body information DB 1031. The body information DB 1031 may be referred to as a customer body information DB or a user body information DB.

An avatar generating engine 1050 may be electrically connected to the customer body information DB 1031, and may generate a user's avatar using the size information for each part of the user's body stored in the customer body information DB 1031 under the control of the main controller 1020. The avatar generating engine 1050 may be referred to as the avatar generator 1050 (refer to FIG. 4). Since the avatar generating engine 1050 is substantially the same as the above-described avatar generator 1050 (refer to FIG. 4), a detailed description thereof will be omitted.

A 3D fitting engine 1024 may fit the generated customer's avatar to 3D clothing. The 3D clothing may be generated by the clothing manufacturer 1400 as a 3D image for each size and color of each model of clothing. The 3D clothing may be stored in a 3D clothing DB 1033 for each size and color of each model of the clothing.

The 3D fitting engine 1024 may search for and select clothing selected by the user in the 3D clothing DB 1033. When the clothing selected by the user are not stored in the 3D clothing DB 1033, the 3D fitting engine 1024 may request a 3D image of the clothing selected by the user from the clothing manufacturer 1400.

In addition, the 3D fitting engine 1024 may operate when new 3D clothing is added to the 3D clothing DB 1033 or a customer's avatar for a new customer is added.

An optimal fit detection engine 1025 may detect a fit in the customer's avatar who has fitted the 3D clothing in the main 3D fitting engine 1024. The optimal fit detection engine 1025 may sense the 3D clothing worn on the customer's avatar, and check a size between the worn 3D clothing and a specific body part of the customer's avatar. For example, if the arm length of the worn 3D clothing is longer than the arm length of the customer's avatar, the optimal fit detection engine 1025 may check this and control to adjust the arm length of the 3D clothing to correspond to the arm length of the customer's avatar.

The optimal fit detection engine 1025 may notify the customer or the user of information about the arm length of the 3D clothing adjusted to the arm length of the customer's avatar.

In this case, the optimal fit detection engine 1025 may display the 3D clothing adjusted to correspond to the customer's avatar and the 3D clothing before being adjusted on the display unit 1060 (refer to FIG. 4) together.

In addition, when the 3D clothing adjusted by the optimal fit detection engine 1025 is displayed on the display unit 1060 (refer to FIG. 4), the customer may readjust it to reflect the customer's intention while reviewing it. In this case, the customer may adjust or readjust the clothing selected by the customer by touching the display unit 1060 (refer to FIG. 4) or through a repair application displayed on the display unit 1060 (refer to FIG. 4).

In addition, the customer may check the information on the arm length of the 3D clothing notified through the external device 900 (refer to FIG. 4) or the display unit 1060 (refer to FIG. 4), and request a repair for this. When the optimal fit detection engine 1025 is provided a repair request signal for clothing from the customer, it may link it to a repair service.

For example, the optimal fit detection engine 1025 may provide the clothing selected by the customer to a repair service company that can repair the clothing to be optimized for the customer's body size under the control of the main controller.

A surrounding environment configuration engine 1023 may configure the background or surrounding environment of the customer's avatar when it is fitted to the customer's avatar by adjusting the clothing selected by the customer.

For example, the surrounding environment configuration engine 1023 may configure a famous overseas place or a famous fashion show runway as the background or the surrounding environment. Alternatively, the surrounding environment configuration engine 1023 may configure a place that cannot be reached, such as space or the sea, as a background. Alternatively, the surrounding environment configuration engine 1023 may configure backgrounds pre-stored by the customer, co-workers, and things with friends as the background.

A rendering engine 1022 may adjust the clothing selected by the customer to fit the customer's avatar, when the background is configured, the rendering engine 1022 may use a rendering technique to express the customer's avatar more realistically or with reality. For example, the rendering engine 1022 may be the rendering technique capable of generating a two-dimensional picture from a three-dimensional ng stored in a scene file along a graphics pipeline through a rendering device such as a graphics processing unit (GPU). The rendering technique may use various functions and technologies that are different for each field.

The rendering engine 1022 may store, in a rendering cut DB 1032, the customer's avatar wearing the clothing selected by the customer on the configured background selected by the customer using the rendering technique.

The rendering cut DB 1032 may be stored for each customer. The rendering cut DB 1032 may be referred to as a V-Ray rendering cut DB 1032 for each customer.

In addition, a clothing recommendation engine 1026 may receive information from a customer information DB 1034, the customer body information DB 1031, and the 3D clothing DB 1033, and recommend the clothing to the customer or user. The customer information DB 1034 may store basic information about the customer, information on a purchase history, information on an activity history, and the like.

The clothing recommendation engine 1026 may use information from the customer information DB 1034, the customer body information DB 1031, and the 3D clothing DB 1033 to recommend the clothing to the customer or the user when the clothing is newly released by the clothing manufacturer 1400.

Alternatively, the clothing recommendation engine 1026 may search for and recommend clothing and clothing-related products that are determined to be of interest to the customer or user, such as photos stored on personal SNS or recommended as "Like" among other people's SNS.

The above-described present disclosure can be implemented as a computer-readable code on a medium on which a program is recorded. The computer readable medium includes all kinds of recording devices in which data that can be read by a computer system is stored. Examples of the computer readable medium may include a hard disk drive (HDD), a solid state disk (SSD), a silicon disk drive (SDD), a ROM, a RAM, a CD-ROM, a magnetic tape, a floppy disk, an optical data storage device, and the like, or be implemented in the form of a carrier wave (e.g. transmission over the internet). Accordingly, the above detailed description should not be construed in all aspects as limiting, and be considered illustrative. The scope of the present disclosure should be determined by rational interpretation of the appended claims, and all changes within the equivalent range of the present disclosure are included in the scope of the present disclosure.

## Claims

1. A method for providing a clothing fitting service using a 3D avatar, comprising:
acquiring (S510) a body image of a user through a 3D camera;
acquiring (S520) body information of the user from the body image;
generating (S530) an avatar corresponding to the user using the body information and the body image;
personalizing and managing (S540) the avatar as a service platform; and
fitting and displaying (S550) clothing selected by the user to the avatar while providing a clothing sales service that can be mapped to the avatar through a service provider selected from among registered service providers,
**characterized in that**
acquiring body information of the user comprises:
extracting a user's body size from the acquired body image; and
configuring a separation distance (D) between the 3D camera and the user in response to the extracted user's body size.

2. The method of claim 1, wherein the acquiring (S520) body information of the user checks a change of the body information in real time or every configured time, when a rate of the change for the body information is out of a preconfigured error range, and upgrades the avatar based on the rate of the change for the body information.

3. The method of claim 2, wherein the rate of change for the body information is provided to a health solution, and is reflected in the service platform by receiving health information corresponding to the rate of change from the health solution.

4. The method of claim 2, wherein the avatar configures a size ratio of the avatar based on the user's body size, and is displayed by varying the size ratio of the avatar according to the clothing selected by the user.

5. The method of claim 1, wherein the generating (S530) an avatar corresponding to the user using the body information and the body image, extracts characteristics of the user from a full-length photograph image of the user, and reflects the characteristics of the user in the avatar.

6. The method of claim 1, wherein the fitting and displaying (S550) to the avatar is fitting the clothing selected by the user to the avatar, and
adjusting the selected clothing to correspond to the size of the avatar and then displaying it.

7. A system for providing a clothing fitting service using a 3D avatar, comprising:
a service platform (1000) configured to acquire body information of a user from a body image of the user taken by a 3D camera unit (1010), and generate an avatar corresponding to the user using the body information and the body image; and
a server (2000) configured to be connected to the service platform (1000) through a communication network, and configured to control, monitor, and manage operation of an entire configuration constituting the service platform (1000),
wherein the service platform (1000) displays clothing selected by the user by fitting the avatar while providing a clothing sales service that can be mapped to the avatar through a service provider selected from among registered service providers, wherein the service platform includes:
the 3D camera unit (1010) configured to include at least one 3D camera disposed on the service platform (1000);
an avatar generator (1050) configured to generate the avatar using the body information and the body image;
a main controller (1020) configured to control at least two or more of components included in the service platform (1000) to operate in combination with each other, receive the avatar from the avatar generator (1050), and fit the clothing selected by the user to the avatar; and
a display unit (1060) configured to display the avatar to which the selected clothing is fitted through the main controller (1020),
**characterized in that**
the main controller (1020) is further configured to:
extracts a user's body size from the acquired body image; and
configure a separation distance (D) between the 3D camera unit (1010) and the user in response to the extracted user's body size.

8. The system of claim 7, wherein the service platform (1000) includes a communication unit (1040) configured to receive the body information from a user's mobile terminal or home appliances disposed in a user's home, and
wherein the main controller (1020) checks a change of the body information in real time or every configured time through the communication unit (1040), when a rate of the change for the body information is out of a preconfigured error range, and provides the rate of the change for the body information to the avatar generator (1050).

9. The system of claim 8, wherein the avatar generator (1050) receives the rate of change for the body information and upgrades the avatar under control of the main controller (1020).

10. The system of claim 8, wherein the main controller (1020) provides the rate of change for the body information to a health solution using the communication unit (1040), and
receives health information corresponding to the rate of change from the health solution and controls it to be displayed on the mobile terminal or the display unit (1060).

11. The system of claim 8, wherein the main controller (1020) configures a size ratio of the avatar based on a user's body size, and
controls the avatar to be displayed on the display unit (1060) by varying the size ratio of the avatar according to the clothing selected by the user.

12. The system of claim 7, wherein the main controller (1020) fits the clothing selected by the user to the avatar, and
controls to adjust the selected clothing to correspond to a size of the avatar.

## Patentansprüche

1. Verfahren zur Bereitstellung eines Kleideranpassungsdienstes unter Verwendung eines 3D-Avatars, umfassend:
Erfassen (S510) eines Körperbilds eines Benutzers durch eine 3D-Kamera;
Erfassen (S520) von Körperinformationen des Benutzers aus dem Körperbild;
Erzeugen (S530) eines dem Benutzer entsprechenden Avatars unter Verwendung der Körperinformationen und des Körperbilds;
Personalisieren und Verwalten (S540) des Avatars als eine Dienstplattform; und
Anpassen und Anzeigen (S550) von vom Benutzer ausgewählter Kleidung am Avatar, während gleichzeitig ein Kleidungsverkaufsdienst, der dem Avatar zugeordnet werden kann, durch einen aus registrierten Dienstanbietern ausgewählten Dienstanbieter bereitgestellt wird,
**dadurch gekennzeichnet, dass** das Erfassen von Körperinformationen des Benutzers umfasst:
Extrahieren einer Körpergröße des Benutzers aus dem erfassten Körperbild; und
Konfigurieren eines Trennabstands (D) zwischen der 3D-Kamera und dem Benutzer als Reaktion auf die extrahierte Körpergröße des Benutzers.

2. Verfahren nach Anspruch 1, wobei das Erfassen (S520) der Körperinformationen des Benutzers eine Änderung der Körperinformationen in Echtzeit oder zu jedem konfigurierten Zeitpunkt prüft, wenn eine Änderungsrate für die Körperinformationen außerhalb eines vorkonfigurierten Fehlerbereichs liegt, und den Avatar basierend auf der Änderungsrate für die Körperinformationen aktualisiert.

3. Verfahren nach Anspruch 2, wobei die Änderungsrate für die Körperinformationen einer Gesundheitslösung bereitgestellt wird und in der Dienstplattform durch Empfang von Gesundheitsinformationen entsprechend der Änderungsrate von der Gesundheitslösung widergespiegelt wird.

4. Verfahren nach Anspruch 2, wobei der Avatar ein Größenverhältnis des Avatars basierend auf der Körpergröße des Benutzers konfiguriert und durch Variieren des Größenverhältnisses des Avatars entsprechend der vom Benutzer ausgewählten Kleidung angezeigt wird.

5. Verfahren nach Anspruch 1, wobei das Erzeugen (S530) eines dem Benutzer entsprechenden Avatars unter Verwendung der Körperinformationen und des Körperbilds Merkmale des Benutzers aus einem Ganzkörperfoto des Benutzers extrahiert und die Merkmale des Benutzers im Avatar widerspiegelt.

6. Verfahren nach Anspruch 1, wobei das Anpassen und Anzeigen (S550) an den Avatar ein Anpassen der vom Benutzer ausgewählten Kleidung an den Avatar, und
ein Justieren der ausgewählten Kleidung, um der Größe des Avatars zu entsprechen, und ein anschließendes Anzeigen ist.

7. System zur Bereitstellung eines Kleideranpassungsdienstes unter Verwendung eines 3D-Avatars, umfassend:
eine Dienstplattform (1000), die dazu eingerichtet ist, Körperinformationen eines Benutzers aus einem von einer 3D-Kameraeinheit (1010) erfassten Körperbild des Benutzers zu erfassen und unter Verwendung der Körperinformationen und des Körperbilds einen dem Benutzer entsprechenden Avatar zu erzeugen; und
einen Server (2000), der dazu eingerichtet ist, über ein Kommunikationsnetzwerk mit der Dienstplattform (1000) verbunden zu werden, und dazu eingerichtet ist, einen Betrieb einer gesamten die Dienstplattform (1000) bildenden Konfiguration zu steuern, zu überwachen und zu verwalten,
wobei die Dienstplattform (1000) vom Benutzer ausgewählte Kleidung anzeigt, indem sie den Avatar anpasst, während gleichzeitig ein Kleidungsverkaufsdienst, der dem Avatar zugeordnet werden kann, über einen aus registrierten Dienstanbietern ausgewählten Dienstanbieter bereitgestellt wird, wobei die Dienstplattform Folgendes umfasst:
die 3D-Kameraeinheit (1010), die dazu eingerichtet ist, mindestens eine 3D-Kamera zu umfassen, die auf der Dienstplattform (1000) angeordnet ist;
einen Avatargenerator (1050), der dazu eingerichtet ist, den Avatar unter Verwendung der Körperinformationen und des Körperbilds zu erzeugen;
eine Hauptsteuerung (1020), die dazu eingerichtet ist, mindestens zwei in der Dienstplattform (1000) enthaltene Komponenten so zu steuern, dass sie in Kombination miteinander arbeiten, den Avatar vom Avatargenerator (1050) empfangen und die vom Benutzer ausgewählte Kleidung an den Avatar anpassen; und
eine Anzeigeeinheit (1060), die dazu eingerichtet ist, über die Hauptsteuerung (1020) den Avatar anzuzeigen, dem die ausgewählte Kleidung angepasst ist,
**dadurch gekennzeichnet, dass**
die Hauptsteuerung (1020) ferner eingerichtet ist zum:
Extrahieren einer Körpergröße des Benutzers aus dem erfassten Körperbild; und
Konfigurieren eines Trennabstands (D) zwischen der 3D-Kameraeinheit (1010) und dem Benutzer als Reaktion auf die extrahierte Körpergröße des Benutzers.

8. System nach Anspruch 7, wobei die Dienstplattform (1000) eine Kommunikationseinheit (1040) umfasst, die dazu eingerichtet ist, die Körperinformationen von einem mobilen Endgerät des Benutzers oder von in einem Haus des Benutzers angeordneten Haushaltsgeräten zu empfangen, und
wobei die Hauptsteuerung (1020) eine Änderung der Körperinformationen in Echtzeit oder zu jedem konfigurierten Zeitpunkt über die Kommunikationseinheit (1040) prüft, wenn eine Änderungsrate für die Körperinformationen außerhalb eines vorkonfigurierten Fehlerbereichs liegt, und die Änderungsrate für die Körperinformationen an den Avatargenerator (1050) bereitstellt.

9. System nach Anspruch 8, wobei der Avatargenerator (1050) die Änderungsrate für die Körperinformationen empfängt und den Avatar unter Kontrolle der Hauptsteuerung (1020) aktualisiert.

10. System nach Anspruch 8, wobei die Hauptsteuerung (1020) die Änderungsrate für die Körperinformationen unter Verwendung der Kommunikationseinheit (1040) an eine Gesundheitslösung bereitstellt, und
Gesundheitsinformationen entsprechend der Änderungsrate von der Gesundheitslösung empfängt und deren Anzeige auf dem mobilen Endgerät oder der Anzeigeeinheit (1060) steuert.

11. System nach Anspruch 8, wobei die Hauptsteuerung (1020) ein Größenverhältnis des Avatars basierend auf einer Körpergröße des Benutzers konfiguriert, und
den auf der Anzeigeeinheit (1060) anzuzeigenden Avatar steuert, indem das Größenverhältnis des Avatars entsprechend der vom Benutzer ausgewählten Kleidung variiert wird.

12. System nach Anspruch 7, wobei die Hauptsteuerung (1020) die vom Benutzer ausgewählte Kleidung an den Avatar anpasst und
steuert, dass die ausgewählte Kleidung justiert wird, um einer Größe des Avatars zu entsprechen.

## Revendications

1. Procédé consiste à offrir un service d'essayage de vêtements à l'aide d'un avatar 3D, comprenant:
l'acquisition (S510) d'une image du corps d'un utilisateur à l'aide d'une caméra 3D;
l'acquisition (S520) des informations sur le corps de l'utilisateur à partir de l'image du corps;
la génération (S530) d'un avatar correspondant à l'utilisateur à l'aide des informations sur le corps et de l'image du corps;
la personnalisation et la gestion (S540) de l'avatar en tant que plate-forme de services; et
l'habillage de l'avatar et l'affichage (S550) de ce dernier avec les vêtements sélectionnés par l'utilisateur, tout en fournissant un service de vente de vêtements qui peut être associé à l'avatar par l'intermédiaire d'un fournisseur de services sélectionné parmi les fournisseurs de services enregistrés,
caractérisé en ce
l'acquisition d'informations sur le corps de l'utilisateur consistant à:
extraire la taille de l'utilisateur à partir de l'image du corps acquise; et
configurer une distance de séparation (D) entre la caméra 3D et l'utilisateur en fonction de la taille de l'utilisateur extraite.

2. Procédé selon la revendication 1, dans lequel l'acquisition (S520) des informations sur le corps de l'utilisateur vérifie une modification des informations sur le corps en temps réel ou à chaque période configurée, lorsqu'un taux de modification des informations sur le corps sort d'une plage d'erreur préconfigurée, et met à niveau l'avatar sur la base du taux de modification des informations sur le corps.

3. Procédé selon la revendication 2, dans lequel le taux de modification des informations sur le corps est fourni à une solution de santé et est reflété dans la plateforme de services par la réception d'informations de santé correspondant au taux de modification en provenance de la solution de santé.

4. Procédé selon la revendication 2, dans lequel l'avatar configure un rapport de taille de l'avatar en fonction de la taille de l'utilisateur, et est affiché en faisant varier le rapport de taille de l'avatar en fonction des vêtements sélectionnés par l'utilisateur.

5. Procédé selon la revendication 1, dans lequel la génération (S530) d'un avatar correspondant à l'utilisateur à l'aide des informations sur le corps et de l'image du corps, extrait des caractéristiques de l'utilisateur à partir d'une photographie en pied de l'utilisateur, et réfléchit les caractéristiques de l'utilisateur dans l'avatar.

6. Procédé selon la revendication 1, dans lequel l'habillage de l'avatar et l'affichage (S550) de ce dernier consistent à habiller l'avatar avec les vêtements sélectionnés par l'utilisateur, et
à ajuster le vêtement sélectionné pour qu'il corresponde à la taille de l'avatar et ensuite l'afficher.

7. Système permettant d'offrir un service d'essayage de vêtements à l'aide d'un avatar 3D, comprenant:
une plate-forme de services (1000) configurée pour acquérir des informations sur le corps d'un utilisateur à partir d'une image du corps de l'utilisateur prise par une unité de caméra 3D (1010), et pour générer un avatar correspondant à l'utilisateur à l'aide des informations sur le corps et de l'image du corps; et
un serveur (2000) configuré pour être connecté à la plate-forme de services (1000) par l'intermédiaire d'un réseau de communication, et configuré pour commander, surveiller et gérer l'opération de configuration complète de la plate-forme de services (1000),
dans lequel la plate-forme de services (1000) affiche les vêtements sélectionnés par l'utilisateur après avoir habillé l'avatar avec ces derniers tout en fournissant un service de vente de vêtements qui peut être associé à l'avatar par l'intermédiaire d'un fournisseur de services sélectionné parmi les fournisseurs de services enregistrés, dans lequel la plate-forme de services comprend:
l'unité de caméra 3D (1010) configurée pour inclure au moins une caméra 3D disposée sur la plate-forme de service (1000);
un générateur d'avatar (1050) configuré pour générer l'avatar correspondant en faisant appel aux informations sur le corps et à l'image du corps;
un dispositif de commande principal (1020) conçu pour commander au moins deux composants de la plate-forme de service (1000) afin qu'ils fonctionnent en combinaison les uns avec les autres, reçoivent l'avatar en provenance du générateur d'avatar (1050), et habillent l'avatar avec les vêtements sélectionnés par l'utilisateur; et
une unité d'affichage (1060) configurée pour afficher l'avatar habillé du vêtement sélectionné par l'intermédiaire du dispositif de commande principal (1020),
caractérisé en ce
le dispositif de commande principal (1020) est en outre configuré pour:
extraire la taille de l'utilisateur à partir de l'image du corps acquise; et
configurer une distance de séparation (D) entre l'unité de caméra 3D (1010) et l'utilisateur en fonction de la taille de l'utilisateur extraite.

8. Système selon la revendication 7, dans lequel la plate-forme de services (1000) comprend une unité de communication (1040) configurée pour recevoir les informations corporelles en provenance d'un terminal mobile de l'utilisateur ou d'appareils ménagers installés au domicile de l'utilisateur, et
dans lequel le dispositif de commande principal (1020) vérifie une modification des informations sur le corps en temps réel ou à chaque moment configuré par l'intermédiaire de l'unité de communication (1040), lorsqu'un taux de modification des informations sur le corps se situe en dehors d'une plage d'erreur préconfigurée, et fournit le taux de modification des informations sur le corps au générateur d'avatar (1050).

9. Système selon la revendication 8, dans lequel le générateur d'avatar (1050) reçoit le taux de modification des informations sur le corps et met à niveau l'avatar sous le contrôle du dispositif de commande principal (1020).

10. Système selon la revendication 8, dans lequel le dispositif de commande principal (1020) fournit le taux de modification des informations sur le corps à une solution de santé à l'aide de l'unité de communication (1040), et
reçoit de la solution de santé des informations sur la santé correspondant au taux de modification et les amène à s'afficher sur le terminal mobile ou l'unité d'affichage (1060).

11. Système selon la revendication 8, dans lequel le dispositif de commande principal (1020) configure un rapport de taille de l'avatar en fonction de la taille de l'utilisateur, et
amène l'avatar à s'afficher sur l'unité d'affichage (1060) en faisant varier le rapport de taille de l'avatar en fonction des vêtements sélectionnés par l'utilisateur.

12. Système selon la revendication 7, dans lequel le dispositif de commande (1020) habille l'avatar avec les vêtements sélectionnés par l'utilisateur, et
ajuste les vêtement sélectionnés pour qu'ils correspondent à la taille de l'avatar.
